# EUROPEAN PATENT APPLICATION

(11) **EP 4 393 564 A1**
(43) Date of publication of application: **03.07.2024**
(21) Application number: 22383323.7
(22) Date of filing: 30.12.2022
(51) Int. Cl.: B01D 53/00, F25J 1/00, F25J 3/06, B01D 53/26, B01D 53/22, B01D 53/18, B01D 53/14

(54) **PLANT TO OBTAIN LIQUID CARBON DIOXIDE BY UPGRADING A GAS MIXTURE AND METHODS**

(71) Applicant: CRYO INOX, S.L., 08213 Polinyà (ES)
(72) Inventor: CALLEJÓN AGRAMUNT, Ismael, 08181 SENTMENAT (ES); FORNS FARRÚS, Sergi, 08320 EL MASNOU (ES); MONTAÑA FAIGET, Àngels, 43000 ASCÓ (ES); CALLEJÓN ÁLVAREZ, Júlia, 08181 SENTMENAT (ES); CALLEJÓN ÁLVAREZ, Carles, 08181 SENTMENAT (ES)
(74) Representative: ZBM Patents - Zea, Barlocci & Markvardsen

(57) **Abstract**

In one aspect, a plant to obtain liquid carbon dioxide by upgrading a gas mixture is provided. The gas mixture comprises CO₂ and CH₄. The plant comprises a cryogenic unit, a CO₂ separation unit, and a storage unit.

In a further aspect, a method of obtaining liquid carbon dioxide by upgrading a gas mixture is provided.

## Description

The present disclosure relates to plants and methods for obtaining liquid carbon dioxide by upgrading a gas mixture.

### BACKGROUND

Biogas refers to a mixture of different gases produced by the breakdown of organic matter in facilities or plants such as solid waste landfills, wastewater treatment plants, or other anaerobic digesters.

Biogas comprises a portion of methane CH₄ (generally 55% mol - 65% mol of the biogas), a portion of carbon dioxide CO₂ (generally 45% mol - 35% mol of the biogas), and lesser portions of other compounds (e.g., water H₂O, hydrogen sulfide H₂S).

CO₂ should be at least partially removed from the biogas because the presence of CO₂ may reduce the heating value of the biogas. Removal of the portion of CO₂ from the biogas raises the biogas's CH₄ content, resulting in a gas that is upgraded with improved heating value.

Similarly, CO₂ should be at least partially removed from a gas mixture comprising a portion of methane CH₄ (for example 55% mol - 65% mol of the gas mixture), a portion of carbon dioxide CO₂ (for example 45% mol - 35% mol of the gas mixture). The aforementioned gas mixture may be e.g., biogas, biomethane, or natural gas depending on its origin (i.e., respectively a renewable source or a fossil source).

On the one hand, gas (i.e., biogas, or natural gas) upgrading may involve separation of CH₄ and other compounds within the gas mixture by passing the gas mixture (to be upgraded) through e.g., various combinations of single-use adsorbent or scavenger beds, pressure-swing adsorption (PSA) systems, temperature-swing adsorption (TSA) systems, membranes, or physical solvent-based absorbers. Gas upgrading and subsequent CO₂ removal may involve plants having complex systems with a high equipment count. Therefore, the implementation cost and the operation cost of these plants are high.

CO₂ is typically separated in a gaseous phase from the gas mixture (to be upgraded). Therefore, subsequent liquefaction of CO₂ is needed for the storage or transport of the CO₂ which increases the energy cost of these plants.

On the other hand, CO₂ can also be separated from the gas mixture by chemical solvent-based absorbers e.g., chemical absorption by reactive amine-based solvents such as monoethanolamine (MEA) or diethanolamine (DEA). These processes present the drawback that the portion of CO₂ from the gas mixture (to be upgraded) contacted with the amine-based solvents must be subsequently separated from the amine-based solvents. Therefore, the portion of CO₂ separated from the gas mixture cannot be directly liquefied or used for e.g., freezing and chilling of food products; carbonation of beverages; water treatment; low temperature testing of aviation and electronic components; oil and gas well stimulations; and controlling chemical reactions. Consequently, plants using amine-based solvents for separating CO₂ from the gas mixture (to be upgraded) may include additional systems that are energy intensive for obtaining liquid CO₂. As a result, these plants are more energy intensive.

In summary, obtaining liquid CO₂ currently involves separation and recovery of e.g., CH₄, or CO₂ from a gas mixture which is energy intensive and an expensive process operation. Plants may comprise both separation systems for gas upgrading and systems for liquefaction of CO₂ because the CO₂ is separated from the gas mixture in gaseous state, and these plants may therefore have an increased plant footprint.

Examples of the present disclosure seek to at least partially reduce one or more of the aforementioned problems.

### SUMMARY

In one aspect, a plant to obtain liquid carbon dioxide by upgrading a gas mixture is provided. The gas mixture comprises CO₂ and CH₄.The plant comprises a cryogenic unit, a CO₂ separation unit, and a storage unit. The cryogenic unit comprises a first inlet to receive the gas mixture to be upgraded and a first outlet to exit the gas mixture to a first predetermined temperature to which the cryogenic unit is configured to cool the gas mixture to be upgraded. The CO₂ separation unit is in fluid communication with the first outlet of the cryogenic unit. The CO₂ separation unit comprises a CO₂ exit line and a CH₄ exit line. The CO₂ separation unit is configured to separate at least part of the CO₂ in liquid phase from the cooled gas mixture, and to exit a first stream comprising liquid CO₂ through the CO₂ exit line; and a second stream comprising a portion of gaseous CH₄ and a portion of gaseous CO₂ through the CH₄ exit line. The CO₂ exit line is in fluid communication with a second inlet of the cryogenic unit whereby the second inlet receives the first stream; and wherein a second outlet of the cryogenic unit exits the first stream to a second predetermined temperature to which the cryogenic unit is configured to cool the first stream. The storage unit is in fluid communication with the second outlet of the cryogenic unit. The storage unit receives the cooled first stream comprising liquid CO₂ and stores the liquid CO₂.

This configuration of the plant allows to efficiently obtain and store liquid CO₂. The storage unit is fluidically connected the cryogenic unit through the second outlet of the cryogenic unit, and to the CO₂ separation unit through the CO₂ exit line. In this configuration, the cryogenic unit that cooled the gas mixture to be upgraded further cools the first stream comprising liquid CO₂ before the first stream is fed to the storage unit. Therefore, the storage unit receives the cooled first stream comprising liquid CO₂ and stores the liquid CO₂. As a result, the plant is less energy intensive and may have a smaller footprint because the plant does not require additional cryogenic units.

It is possible to operate the plant to upgrade the gas mixture with no additional phase change (e.g., from gaseous phase to liquid phase or from solid phase to liquid phase) of the CO₂ during gas upgrading and removal of CO₂ from the gas mixture to be upgraded because the CO₂ is directly obtained in liquid phase. Therefore, the plant may comprise fewer parts and allows to implement simpler systems while directly obtaining liquid CO₂.

For example, it is possible to achieve upgrading of gas mixture with suitable ranges of temperature and pressure. In some examples, the first predetermined temperature to which the cryogenic unit is configured to cool the gas mixture to be upgraded, may be comprised between - 70°C and - 50°C, for example between - 60°C and - 50°C.

In some of these examples, a pressure to which the cryogenic unit is configured to receive the gas mixture to be upgraded, may be comprised between 30 barg and 50 barg, for example between 36 barg and 39 barg.

In some examples, the plant may comprise a dehydration unit coupled to the cryogenic unit, the dehydration unit configured to remove moisture from the gas mixture to be upgraded so that the gas mixture to be upgraded comprises 1 ppm of H₂O or less than 1 ppm of H₂O. In some of these examples, the gas mixture to be upgraded may be received by the dehydration unit with a pressure comprised between 0.2 barg and 15 barg.

In some of these examples, the dehydration unit may comprise one or more adsorbers configured to reduce an H₂O content of the gas mixture to be upgraded, to a final H₂O content which is less than or equal to 1 ppm of H₂O. The one or more adsorbers (e.g., zeolite or alumina-based adsorbents) may be loaded with adsorbents capable of reversibly adsorbing the H₂O of the gas mixture. The one or more adsorbers may be selected to achieve that the gas mixture to be upgraded comprises 1 ppm of H₂O or less than 1 ppm of H₂O.

In some of these examples, the dehydration unit may comprise an inlet and an outlet. The inlet of the dehydration unit may be configured to receive the gas mixture to be upgraded; and the outlet of the dehydration unit may be fluidically connected to the first inlet of the cryogenic unit so that the gas mixture to be upgraded that is fed to the cryogenic unit comprises 1 ppm of H₂O or less than 1 ppm of H₂O. Therefore, a reduced amount of water may enter the cryogenic unit. Consequently, a reduced amount of solidified water, which can damage any element of the plant, may go through the units. As a result, wear may thus be reduced, and shutdown of the plant for maintenance may be avoided.

In some examples, the CO₂ separation unit may comprise a flash tank and a distillation column. The flash tank may comprise a flash tank inlet, a first flash tank outlet, and a second flash tank outlet. The flash tank inlet may be in fluid communication with the first outlet of the cryogenic unit whereby the flash tank inlet may receive the gas mixture to be upgraded. The first flash tank outlet may exit a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄. The second flash tank outlet may exit a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂. Furthermore, the distillation column may comprise a distillation column inlet in fluid communication with the first flash tank outlet through the CO₂ rich flash tank exit line, the distillation column inlet to receive the first flash tank stream. The first distillation column outlet may exit the first stream from the distillation column through the CO₂ exit line, the first stream comprising a final portion of liquid CO₂, wherein the final portion of the liquid CO₂ is greater than or equal to 99.9% mol of the first stream. The second distillation column outlet may exit the second stream from the distillation column through the CH₄ exit line, the second stream comprising the portion of gaseous CH₄ and the portion of CO₂ through the CH₄ exit line, wherein the portion of gaseous CH₄ is greater than the portion of gaseous CO₂.

In some examples, the flash tank may be configured to receive the gas mixture to be upgraded with the temperature comprised between - 70°C and - 50°C; and the pressure comprised between 30 barg and 50 barg; recover the first flash tank stream from the flash tank through the CO₂ rich flash tank exit line, the first flash tank stream comprising a portion of liquid CO₂ and a portion of liquid CH₄, wherein the portion of liquid CO₂ is greater than the portion of liquid CH₄; and the second flash tank stream from the flash tank through the CH₄ rich flash tank exit line, the second flash tank stream comprising a portion of gaseous CH₄ and a portion of gaseous CO₂; wherein the portion of gaseous CH₄ is greater than the portion of gaseous CO₂. The distillation column may be fluidically connected to the flash tank through the CO₂ rich flash tank exit line. The distillation column may be configured to receive the first flash tank stream through the CO₂ rich flash tank exit line; and recover: the first stream from the distillation column through the CO₂ exit line, the first stream comprising a final portion of the liquid CO₂, wherein the final portion of the liquid CO₂ is greater than or equal to 99.9% mol of the first stream; and the second stream from the distillation column through the CH₄ exit line, the second stream comprising the portion of gaseous CH₄ and the portion of CO₂ through the CH₄ exit line, wherein the portion of gaseous CH₄ is greater than the portion of gaseous CO₂. Therefore, the plant may comprise fewer parts and may allow to implement simpler systems while obtaining a food grade liquid CO₂ (i.e., at least 99.9% mol of the first stream comprises CO₂, impurities such as CH₄, H₂S, H₂O up to 1% mol of the first stream may remain).

In some examples, the temperature to which the gas mixture to be upgraded is received by the flash tank, may be comprised between - 60°C and - 50°C.

In some of these examples, the CO₂ separation unit may be configured to receive the gas mixture to be upgraded with a pressure comprised between 30 barg and 50 barg, for example between 36 barg and 39 barg.

The configuration of operating pressure and operating temperature to which the CO₂ separation unit is configured to receive the gas mixture to be upgraded, may be selected to achieve selective separation of CO₂ from CH₄ because of different liquefaction temperature between the CO₂ and the CH₄ for the operating pressure. Surprisingly, at these operating temperatures (e.g., - 60°C < t < - 50°C) and at the operating pressures (e.g., 36 barg < p < 39 barg), the energy cost of the separation of CO₂ from the gas mixture to be upgraded may be decreased. As a result, a plant with reduced energy consumption may be obtained.

In this configuration of operating temperatures and operating pressures, the first stream comprising liquid CO₂, and exiting the CO₂ separation unit through the CO₂ exit line may be at a temperature comprised between 2°C and 5°C. The liquid CO₂ exiting the CO₂ separation unit through the CO₂ exit line may be further cooled by the cryogenic unit that cooled the gas mixture to be upgraded prior to being fed to the storage unit. Hence, the second predetermined temperature to which the cryogenic unit is configured to cool the first stream, may be comprised between - 40°C and - 25°C, and for example - 30°C. Therefore, separation of CO₂ from the gas mixture to be upgraded and retrieval of liquefied CO₂ may be achieved in a single unit (i.e., the CO₂ separation unit). As a result, storage or transport of the liquid CO₂ may be achieved with a reduced energy cost. In addition, the plant may have a reduced plant footprint (i.e., the space needed for implementing the plant is reduced).

In some of these examples, the plant may comprise a membrane upgrading unit to be fed with the second flash tank stream through the CH₄ rich flash tank exit line and / or to be fed with the second stream through the CH₄ exit line. In these examples, the second flash tank stream exiting the flash tank through the CH₄ rich flash tank exit line and / or the second stream exiting the distillation column through CH₄ exit line may be heated by the cryogenic unit that cooled the gas mixture to be upgraded prior to being fed to the membrane upgrading unit.

The configuration of the membrane upgrading unit with the cryogenic unit may allow to efficiently increase the content of CH₄ of a stream comprising the second flash tank stream and / or the second stream. The membrane upgrading unit may be fluidically connected to the CO₂ separation unit through the CH₄ rich flash tank exit line and / or through the CH₄ exit line. In this configuration, the cryogenic unit that cooled the gas mixture to be upgraded may heat the second flash tank stream and I or the second stream before the second flash tank stream and I or the second stream may be fed to the membrane upgrading unit. As a result, the membrane upgrading unit may receive a CH₄ rich stream (i.e., the second flash tank stream and / or the second stream) at a suitable temperature for the operation of the membrane upgrading unit.

In some of these examples, the membrane upgrading unit may be configured to receive the second flash tank stream through the CH₄ rich flash tank exit line and / or the second stream through the CH₄ exit line. The second flash tank stream and / or the second stream may be: at a temperature comprised between 10°C and 25°C; and at a pressure comprised between 30 barg and 50 barg. Furthermore, the membrane upgrading unit may be further configured to: separate at least part of the CH₄ in gaseous phase from the second flash tank stream and / or the second stream; and output a first membrane upgrading stream and a second membrane upgrading stream. The first membrane upgrading stream may exit the membrane upgrading unit through a CH₄ rich membrane upgrading exit line. The first membrane upgrading stream may comprise a final portion of the gaseous CH₄, wherein the final portion of the gaseous CH₄ may be greater than or equal to 96% mol of the first membrane upgrading stream. The second membrane upgrading stream may exit the membrane upgrading unit through a CO₂ rich membrane upgrading exit line. The first membrane upgrading stream may comprise a final portion of the gaseous CH₄, wherein the final portion of the gaseous CH₄ may be greater than the portion of gaseous CO₂. In these examples, the CH₄ rich membrane upgrading exit line may be fluidically connected to the grid. Therefore, an upgraded methane stream (i.e., the gaseous CH₄ of the first membrane upgrading stream with a final portion of gaseous CH₄ greater than or equal to 96% mol) may readily be injected into the grid for its use.

In some of these examples, the dehydration unit may be fluidically connected to the membrane upgrading unit through the CO₂ rich membrane upgrading exit line; and the dehydration unit may be at least partially fed with the second membrane upgrading stream through the CO₂ rich membrane upgrading exit line. Therefore, there may be a feedback line from the membrane upgrading unit to the dehydration unit so that streams that are still CO₂ rich (i.e., streams comprising a preponderant portion of CO₂) may be fed to the dehydration unit to start over the process of separation and liquefaction of CO₂. It may be noted that in some of these examples, the membrane upgrading unit may be in fluid connection with a compression unit through the CO₂ rich membrane upgrading exit line. The compression unit may be configured to compress the second membrane upgrading stream to a pressure comprised between 30 barg and 50 barg. Furthermore, the compression unit may be in fluid connection with the cryogenic unit. Therefore, the second membrane upgrading stream may be fed to the cryogenic unit at a pressure comprised between 30 barg and 50 barg. As a result, the plant may separate substantially all the portion of CO₂ comprised in the gas mixture to be upgraded without spilling or losses of the portion of CO₂ during gas upgrading, or during separation and liquefaction of the CO₂. Furthermore, contrary to plants using amine-based solvents for separating CO₂ from the gas mixture (to be upgraded), there may be no additional systems that are energy intensive for obtaining liquid CO₂ nor spillage of CO₂.

In a further aspect, a method of obtaining liquid carbon dioxide by upgrading a gas mixture is provided. The method comprises obtaining a gas mixture to be upgraded, the gas mixture to be upgraded comprising 1 ppm of H₂O or less than 1 ppm of H₂O; feeding the gas mixture to be upgraded to a cryogenic unit and cooling to a first predetermined temperature the gas mixture to be upgraded; feeding the cooled gas mixture to be upgraded to a CO₂ separation unit for separating at least part of the CO₂ in liquid phase from the cooled gas mixture; recovering a first stream comprising liquid CO₂ from the CO₂ separation unit through a CO₂ exit line; recovering a second stream comprising a portion of gaseous CH₄ and a portion of gaseous CO₂ from the CO₂ separation unit through a CH₄ exit line; feeding the first stream comprising liquid CO₂ to the cryogenic unit that cooled the gas mixture to be upgraded and cooling to a second predetermined temperature the first stream comprising liquid CO₂ with the cryogenic unit; and feeding the cooled first stream comprising liquid CO₂ to a storage unit through the CO₂ exit line.

According to this aspect, a method of obtaining liquid carbon dioxide is provided in which the liquid CO₂ exiting the CO₂ separation unit is further cooled by the cryogenic unit that cooled the gas mixture to be upgraded before the liquid CO₂ is fed to the storage unit through the CO₂ exit line. As a result, the plant is less energy intensive and may have a smaller footprint because the plant may not include additional cryogenic units.

In some examples, a pressure to which the gas mixture is obtained, may be comprised between 30 barg and 50 barg.

In some examples, the first predetermined temperature to which the cryogenic unit is configured to cool the gas mixture to be upgraded may be comprised between - 70°C and - 50°C.

Furthermore, the obtained liquid carbon dioxide is directly obtained in liquid phase. Therefore, the plant may comprise fewer parts and allows to implement simpler systems while directly obtaining liquid CO₂.

In some examples, feeding the cooled gas mixture to a CO₂ separation unit for separating at least part of the CO₂ in liquid phase from the cooled gas mixture may comprise: feeding the cooled gas mixture to a flash tank, the cooled gas mixture to the first predetermined temperature comprised between - 70°C and - 50°C and to a pressure comprised between 30 barg and 50 barg; recovering: a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂; feeding the first flash tank stream to a distillation column fluidically connected to the flash tank through the CO₂ rich flash tank exit line.

Furthermore, in some of these examples, recovering a first stream comprising liquid CO₂ from the CO₂ separation unit through a CO₂ exit line may comprise: recovering the first stream from the distillation column through the CO₂ exit line, the first stream comprising a final portion of liquid CO₂, wherein the final portion of the liquid CO₂ is greater than or equal to 99.9% mol of the first stream.

Moreover, in some of these examples, recovering a second stream comprising a portion of gaseous CH₄ and a portion of gaseous CO₂ from the CO₂ separation unit through a CH₄ exit line may comprise: recovering the second stream from the distillation column through the CH₄ exit line, the second stream comprising the portion of gaseous CH₄ and the portion of CO₂, wherein the portion of gaseous CH₄ is greater than the portion of gaseous CO₂.

The term gas mixture may be understood as any gas comprising a portion of CO₂, and a portion of CH₄. For example, the gas mixture composition may vary accordingly if the gas mixture is a biogas, or biomethane, or natural gas.

The term gas upgrading may refer to any process which is capable of separating a gas mixture into its constituent gases (e.g., methane CH₄, carbon dioxide CO₂, water H₂O, and hydrogen sulfide H₂S). The gas mixture may be e.g., biogas or natural gas depending on its origin (i.e., respectively a renewable source or a fossil source).

The term barg may be understood as the unit for the measurement of the pressure given by absolute pressure minus atmospheric pressure.

The term "% mol" may be used to refer to a molar percentage of a number of moles of a first component (e.g., CH₄) present in a mixture relative to the total number of moles comprised in the mixture.

The term preponderant portion may be used to refer to a first gas portion which may be numerically greater than a second gas portion. For example, a gas mixture with a portion of CH₄ of 51% mol, and a portion of CO₂ of 49% mol. The portion of CH₄ is the preponderant portion of the gas mixture, compared to the portion of CO₂.

### BRIEF DESCRIPTION OF THE DRAWINGS

Non-limiting examples of the present disclosure will be described in the following, with reference to the appended drawings in which:
Figure 1 is a simplified view of a plant to obtain liquid carbon dioxide by upgrading a gas mixture according to an example of the present disclosure;
Figure 2 schematically represents a plant to obtain liquid carbon dioxide by upgrading a gas mixture according to an example of the present disclosure;
Figure 3 schematically represents a plant to obtain liquid carbon dioxide by upgrading a gas mixture according to an example of the present disclosure;
Figure 4 schematically represents a plant to obtain liquid carbon dioxide by upgrading a gas mixture according to an example of the present disclosure;
Figure 5 schematically represents a plant to obtain liquid carbon dioxide by upgrading a gas mixture according to an example of the present disclosure;
Figure 6 schematically shows a block diagram of a method of obtaining liquid carbon dioxide by upgrading a gas mixture according to an example of the present disclosure; and
Figure 7 schematically shows a block diagram of a method of obtaining liquid carbon dioxide by upgrading a gas mixture according to an example of the present disclosure.

### DETAILED DESCRIPTION OF EXAMPLES

In these figures, the same reference signs have been used to designate matching elements.

Throughout the description, a gas mixture may comprise a portion of methane CH₄ (for example 55% mol - 65% mol of the gas mixture), and a portion of carbon dioxide CO₂ (for example 45% mol - 35% mol of the gas mixture). The aforementioned gas mixture may be e.g., biogas or natural gas depending on its origin (i.e., respectively a renewable source or a fossil source).

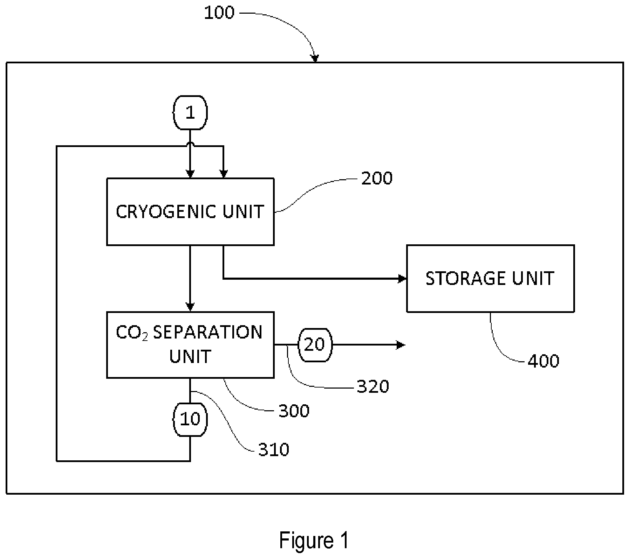

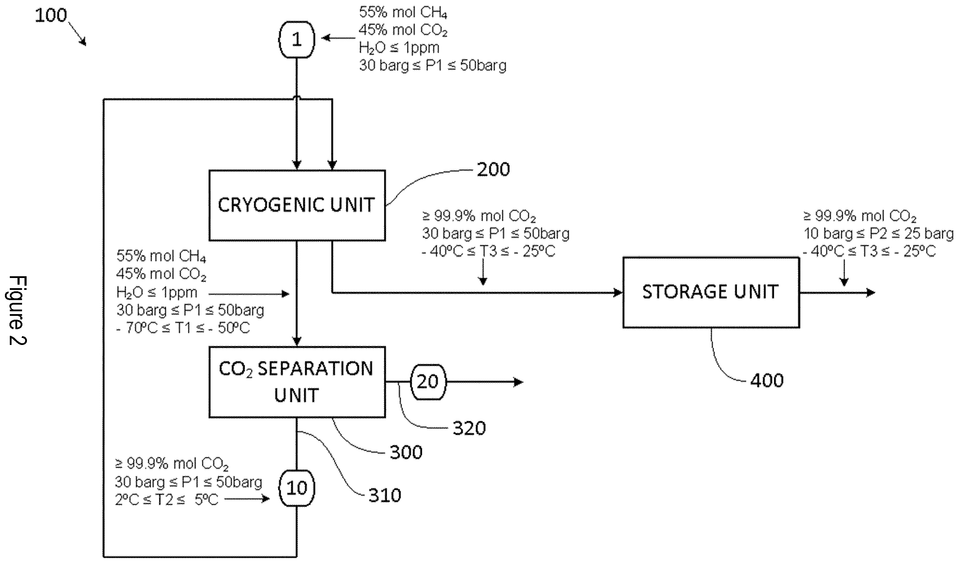

Features of figure 1 may be described in combination with the features of any of the examples shown in figures 2-5.

Figure 1 is a simplified view of one example of a plant 100 to obtain liquid carbon dioxide by upgrading a gas mixture 1. The plant 100 comprises a cryogenic unit 200, a CO₂ separation unit 300 coupled to the cryogenic unit 200, and a storage unit 400.

The cryogenic unit 200 is configured to receive the gas mixture 1 to be upgraded; and cool the gas mixture 1 to a first predetermined temperature. The cryogenic unit 200 is based on a Rankine cycle which allows adjusting thermal requirements for cooling and / or heating a gas mixture 1 to be upgraded.

The cryogenic unit 200 may comprise a first inlet to receive the gas mixture 1 to be upgraded and a first outlet to exit the gas mixture to a first predetermined temperature to which the cryogenic unit is configured to cool the gas mixture to be upgraded.

Cryogenic units are based on refrigeration cycles. The refrigerant of these refrigeration cycles may be part of the gas stream to be cooled (open cycle process) or a separate refrigerant continuously recirculated through a heat exchanger or a cold box (closed cycle process).

In the example of figure 1, the cryogenic unit 200 is based on a closed Rankine cycle. The closed Rankine cycle may use a mixed refrigerant (e.g., a mixture of compounds such as hydrocarbons). The composition of the mixed refrigerant may be selected to match the boiling curve of each compound forming the mixed refrigerant with a cooling curve of the gas mixture 1 to be upgraded or with a cooling curve of any received gas stream. Therefore, the mixed refrigerant may provide a cooling duty across a range of temperatures comprised between - 150°C and 25°C. Particularly, the refrigerant mixture may comprise compounds which are at least partially in liquid phase across the temperature range mentioned above. As a result, the refrigerant mixture may provide latent heat to cool the gas mixture 1 to be upgraded or the received stream.

In some examples, the cryogenic unit 200 may cool the gas mixture 1 to be upgraded by the action of a counter current flow refrigerant cycle (i.e., the mixed refrigerant flows in an opposite direction to the flow of gas being cooled) during operation of the cryogenic unit 200).

It may be noted that depending on the temperature of the gas mixture 1 to be upgraded or the temperature of the received stream, the cryogenic unit 200 may cool the gas mixture 1 to be upgraded or the received stream across the temperature range mentioned above. Similarly, the cryogenic unit 200 may heat the gas mixture 1 to be upgraded or the received stream across the temperature range mentioned above.

In some examples, the first predetermined temperature to which the gas mixture 1 to be upgraded is cooled by the cryogenic unit may be comprised between - 70°C and - 50°C, for example between - 60°C and - 50°C. Therefore, a gas mixture 1 to be upgraded may be cooled from ambient temperature to a temperature comprised between - 70°C and - 50°C.

In some of these examples, the gas mixture 1 to be upgraded, which is received by the cryogenic unit 200, may be at a pressure comprised between 30 barg and 50 barg, for example between 36 barg and 39 barg. At these operating temperatures (e.g., - 60°C < t < - 50°C) and at these operating pressures (e.g., 36 barg < p < 39 barg), the energy cost of the separation of CO₂ from the gas mixture 1 to be upgraded may be decreased.

Referring to the CO₂ separation unit 300, the CO₂ separation unit 300 is in fluid communication with the first outlet of the cryogenic unit 200. Furthermore, the CO₂ separation unit comprises a CO₂ exit line 310 and a CH₄ exit line 320. The CO₂ separation unit 300 is configured to separate at least part of the CO₂ in liquid phase from the cooled gas mixture. The CO₂ separation unit 300 is configured to output a first stream 10 and a second stream 20. The first stream 10 may comprise liquid CO₂. Therefore, it is possible to obtain that the portion of liquid CO₂ is greater than or equal to 99.9% mol of the first stream (as will be later explain on). Consequently, a food grade liquid CO₂ may be obtained. In figure 1, the first stream 10 exits the CO₂ separation unit 300 through the CO₂ exit line 310.

Similarly, the second stream 20 may comprise a mixture of a portion of gaseous CH₄ and a portion of gaseous CO₂. The portion of gaseous CH₄ within the second stream 20 may be greater than the portion of gaseous CO₂ within the second stream 20. In figure 1, the second stream 20 exits the CO₂ separation unit 300 through the CH₄ exit line 320.

In some examples, the cryogenic unit 200 may be further configured to: receive the gas mixture 1 to be upgraded with a pressure comprised between 30 barg and 50 barg; and cool the gas mixture 1 to the first predetermined temperature comprised between - 70°C and - 50°C. In these examples, the CO₂ separation unit 300 may be coupled to the cryogenic unit 200, and the CO₂ separation unit 300 may be configured to at least partially separate CO₂ from the gas mixture 1 to be upgraded, and to output: the first stream 10 comprising liquid CO₂ through the CO₂ exit line 310; and the second stream 20 comprising a portion of gaseous CH₄ and a portion of gaseous CO₂ through the CH₄ exit line 320. In these examples, the storage unit 400 may be fed with the liquid CO₂ through the CO₂ exit line 310. In some of these examples, the temperature to which the gas mixture 1 to be upgraded is cooled may be comprised between - 60°C and - 50°C. Furthermore, the above-mentioned operating pressures and the above-mentioned operating temperatures to which the gas mixture 1 to be upgraded may be received by the CO₂ separation unit 300, may be selected to achieve selective separation of CO₂ from the gas mixture 1 to be upgraded (comprising at least a portion of CH₄) because of different liquefaction temperatures between the portion of CO₂ and the portion of CH₄ for the operating pressure of the CO₂ separation unit 300. At these operating pressures and at these operating temperatures, the portion of CH₄ may be mainly in gaseous phase whereas the portion of CO₂ may be mainly in liquid phase. Consequently, separation of CO₂ from the gas mixture comprising CH₄ may be achieved because the CO₂ and the CH₄ are in different phases at these operating pressures and at these operating temperatures (respectively, the portion of CO₂ may be in liquid phase, and the portion of CH₄ may be in gaseous phase). Therefore, gas upgrading and retrieval of the liquid CO₂ may be achieved in a single unit (i.e., the CO₂ separation unit).

As a result, storage or transport of the liquid CO₂ may be achieved with a reduced energy cost. In addition, the plant 100 may have a reduced plant footprint (i.e., the space needed for implementing the plant is reduced).

In some examples, the first stream 10 (which may comprise liquid CO₂) exiting the CO₂ separation unit 300 through the CO₂ exit line 310 may be at a temperature comprised between 2°C and 5°C. Furthermore, the first stream 10 (which may comprise liquid CO₂) exiting the CO₂ separation unit 300 through the CO₂ exit line 310 may be further cooled to a second predetermined temperature comprised between - 40°C and - 25°C, for example at - 30 °C by the cryogenic unit 200 that cooled the gas mixture to be upgraded prior to being fed to the storage unit 400.

Referring to the storage unit 400, the storage unit 400 may be in fluid communication with the CO₂ separation unit 300 via the CO₂ exit line 310. In the example of figure 1, the cryogenic unit 200 that cooled the gas mixture 1 to be upgraded further cools the first stream 10 comprising the liquid CO₂ before the first stream 10 comprising the liquid CO₂ is fed to the storage unit 400 through the CO₂ exit line 310. As a result, the plant 100 may be less energy intensive and may have a smaller footprint because the plant 100 may not include additional cryogenic units.

Particularly, the CO₂ separation unit 300 may be in fluid communication with a second inlet of the cryogenic unit 200 through the CO₂ exit line 310. The second inlet of the cryogenic unit 200 may receive the first stream 10. Furthermore, the cryogenic unit 200 comprises a second outlet to exit the first stream to the second predetermined temperature to which the cryogenic unit 200 is configured to cool the first stream 10. Consequently, the storage unit 400 is in fluid communication with the second outlet of the cryogenic unit whereby the storage unit 400 receives the cooled first stream comprising liquid CO₂ and stores the liquid CO₂.

Furthermore, in some examples, the plant 100 may comprise a desulphurization unit coupled to the cryogenic unit 200. The desulphurization unit may be configured to receive the gas mixture 1 to be upgraded with a pressure comprised between 0.2 barg and 15 barg, for example between 10 barg and 15 barg; and remove H₂S from the gas mixture 1 to be upgraded so that the gas mixture 1 to be upgraded may comprise 4 ppm of H₂S or less than 4 ppm of H₂S. Therefore, the gas mixture 1 to be upgraded may be at least partially desulphurized by the action of the desulphurization unit. As a result, the received gas mixture to be upgraded by the cryogenic unit 200 may comprise up to 4 ppm of H₂S.

In some of these examples, the desulphurization unit may comprise a NaOH scrubbing column and an active carbon filter. The NaOH scrubbing column may be configured to reduce an H₂S content of the gas mixture 1 to a resulting H₂S content which is less than or equal to 100 ppm of H₂S. The active carbon filter may be coupled to the NaOH scrubbing column and the active carbon filter may be configured to reduce the resulting H₂S content of the gas mixture to a final H₂S content which is less than or equal to 4 ppm of H₂S. Therefore, a gas mixture 1 that is a mixture of gases with an initial content of H₂S may comprise a final H₂S content of up to 4 ppm of H₂S by the action of the NaOH scrubbing column and the active carbon filter.

In these examples, the desulphurization unit may comprise an inlet and an outlet. The inlet of the desulphurization unit may be configured to receive the gas mixture 1 to be upgraded; and the outlet of the desulphurization unit may be fluidically connected to the first inlet of the cryogenic unit 200 and the gas mixture to be upgraded comprising 4 ppm of H₂S or less than 4 ppm of H₂S may be fed to the cryogenic unit. As a result, the received gas mixture to be upgraded by the cryogenic unit may comprise up to 4 ppm of H₂S.

In some examples, the plant 100 may comprise a dehydration unit coupled to the cryogenic unit 200. The dehydration unit may be configured to receive the gas mixture 1 to be upgraded with a pressure comprised between 0.2 barg and 15 barg, for example between 10 barg and 15 barg; and remove moisture from the gas mixture 1 to be upgraded so that the gas mixture 1 to be upgraded may comprise 1 ppm of H₂O or less than 1 ppm of H₂O. Therefore, the gas mixture 1 to be upgraded may be at least partially dehydrated by the action of the dehydration unit. As a result, the received gas mixture 1 to be upgraded by the cryogenic unit may comprise up to 1 ppm of H₂O.

In some of these examples, the dehydration unit may comprise one or more adsorbers configured to reduce an H₂O content of the gas mixture 1 to be upgraded to a final H₂O content which is less than or equal to 1 ppm of H₂O. The one or more adsorbers are configured to remove moisture from the gas mixture 1 to be upgraded. In some of these examples, the one or more adsorbers may be selected to achieve that the gas mixture 1 to be upgraded may comprise 1 ppm of H₂O or less than 1 ppm of H₂O. As a result, the received gas mixture 1 to be upgraded by the cryogenic unit 200 may comprise up to 1 ppm of H₂O.

In these examples, the dehydration unit may comprise an inlet and an outlet. The inlet of the dehydration unit may be configured to receive the gas mixture 1 to be upgraded; and the outlet of the dehydration unit may be fluidically connected to the first inlet of the cryogenic unit so that the gas mixture 1 to be upgraded comprising 1 ppm of H₂O or less than 1 ppm of H₂O may be fed to the first inlet of the cryogenic unit 200.

It may be noted that the cryogenic unit 200 may receive the gas mixture 1 to be upgraded or depending on the composition of the received gas mixture 1 to be upgraded, the plant 100 may comprise a desulphurization unit and / or a dehydration unit for removing H₂S or H₂O from the gas mixture 1 to be upgraded. In the latter case (i.e., when the plant 100 may comprise a desulphurization unit and / or a dehydration unit), the received gas mixture 1 to be upgraded may be at least partially desulphurized and / or at least partially dehydrated by respectively the action of the desulphurization unit and / or the dehydration unit before being supplied to the cryogenic unit 200.

Therefore, in some examples, the plant 100 may comprise a cleaning unit coupled to the cryogenic unit 200. The cleaning unit may comprise the above-mentioned desulphurization unit and the above-mentioned dehydration unit. Therefore, the gas mixture 1 to be upgraded may be at least partially desulphurized and at least partially dehydrated by respectively the action of the desulphurization unit and the dehydration unit. As a result, the received gas mixture 1 to be upgraded by the cryogenic unit may comprise up to 4 ppm of H₂S and up to 1 ppm of H₂O. In these examples, the desulphurization unit and / or the dehydration unit may comprise the respective features of any example of desulphurization unit and / or the features of any example of the dehydration unit herein disclosed.

In some of these examples, the cleaning unit may comprise an inlet and an outlet. The inlet of the cleaning unit may be configured to receive the gas mixture 1 to be upgraded; and the outlet of the cleaning unit may be fluidically connected to the first inlet of the cryogenic unit 200. Therefore, the gas mixture 1 to be upgraded may comprise 4 ppm of H₂S or less than 4 ppm of H₂S, and 1 ppm of H₂O or less than 1 ppm of H₂O. As a result, a gas mixture 1 with up to 4 ppm of H₂S and up to 1 ppm of H₂O may be fed to the cryogenic unit 200.

Similarly, it may be noted that the cryogenic unit 200 may receive a gas mixture 1 to be upgraded at a pressure. Depending on the pressure of the received gas mixture 1 to be upgraded, the plant 100 may comprise one or more compression units to increase the pressure of the received gas mixture 1 to be upgraded before the received gas mixture 1 to be upgraded may be supplied to the cryogenic unit.

In some examples, the plant 100 may comprise a first compression unit coupled to the cryogenic unit 200. The first compression unit may be configured to compress the gas mixture 1 to be upgraded at a first compression pressure. The first compression pressure may be comprised between 0.2 barg and 15 barg, for example between 10 barg and 15 barg. In these examples, the gas mixture 1 to be upgraded may be compressed by the first compression unit before the gas mixture 1 to be upgraded may be supplied to the desulphurization unit and / or to the dehydration unit.

In some of these examples, the plant 100 may comprise a second compression unit coupled to the cryogenic unit. The second compression unit may be configured to compress the gas mixture to be upgraded at a second compression pressure. Particularly, the second compression pressure may be greater than the first compression pressure and the second compression pressure may be comprised between 30 barg and 50 barg, for example between 36 barg and 39 barg, and more for example at 36 barg.

It may be noted that the cryogenic unit is configured to receive the gas mixture to be upgraded where the gas mixture to be upgraded may be at a pressure comprised between 30 barg and 50 barg, for example between 36 barg and 39 barg.

By compressing the gas mixture 1 to be upgraded, separation of CO₂ from the gas mixture 1 to be upgraded may be facilitated. Therefore, the overall electric work required by the cryogenic unit 200 to cool the gas mixture 1 to be upgraded may be reduced. As a result, compressing the gas mixture 1 to be upgraded before the gas mixture 1 is fed to the cryogenic unit 200 and / or to the CO₂ separation unit, may reduce the overall electric work required to obtain liquid CO₂ from the gas mixture 1.

Figure 2 schematically represents a plant 100 to obtain liquid carbon dioxide by upgrading a gas mixture 1. Features of figure 2 may be described in combination with the features of any of the examples shown in figure 1.

In figure 2, the gas mixture 1 to be upgraded may comprise 55 % mol CH₄, 45 % mol CO₂, and the H₂O content within the gas mixture 1 is equal to or less than 1 ppm. In the example of figure 2, the gas mixture 1 to be upgraded may be at a pressure P1 comprised between 30 barg and 50 barg, for example between 36 barg and 39 barg. Therefore, the gas mixture 1 to be upgraded may be supplied to the cryogenic unit 200 at the pressure comprised e.g., between 30 barg and 50 barg.

By the passage of the gas mixture 1 to be upgraded within the cryogenic unit 200, the gas mixture 1 to be upgraded may be cooled to the first predetermined temperature T1 comprised between - 70°C and - 50°C, for example between - 60°C and - 50°C.

Therefore, the temperature to which the gas mixture 1 to be upgraded is exited from the cryogenic unit 200, may be comprised between - 70°C and - 50°C. Furthermore, the cooled gas mixture 1 to be upgraded may comprise the same above-mentioned composition (i.e., 55 % mol CH₄, 45 % mol CO₂, and an H₂O content of the gas mixture 1 that is equal to or less than 1 ppm).

In figure 2, the cooled gas mixture 1 to be upgraded is supplied to the CO₂ separation unit 300 to separate at least part of the CO₂ in liquid phase from the cooled gas mixture 1 to be upgraded. In this example of figure 2, the received cooled gas mixture 1 to be upgraded by the CO₂ separation unit 300 may comprise a temperature between - 60°C and - 50°C, and a pressure comprised between 36 barg and 39 barg.

Therefore, in this example, the CO₂ separation unit 300 may comprise an operating temperature between - 60°C and - 50°C, and an operating pressure comprised between 36 barg and 39 barg. At these operating pressures and at these operating temperatures, the portion of CH₄ of the gas mixture 1 to be upgraded may be mainly in gaseous phase whereas the portion of CO₂ may be mainly in liquid phase. Consequently, separation of CO₂ from the gas mixture comprising CH₄ may be achieved because the CO₂ and the CH₄ are in different phases at these operating pressures and at these operating temperatures (respectively, the portion of CO₂ may be in liquid phase, and the portion of CH₄ may be in gaseous phase). As a result, gas upgrading and retrieval of liquid CO₂ may be achieved in a single unit (i.e., the CO₂ separation unit).

The CO₂ separation unit 300 provides a first stream 10 which is exited from the CO₂ separation unit 300 through the CO₂ exit line 310. By the passage of the gas mixture 1 to be upgraded within the CO₂ separation unit 300, the first stream 10 may comprise at least 99.9% mol of liquid CO₂. Particularly, the portion of liquid CO₂ is greater than or equal to 99.9% mol of the first stream. In figure 2, the first stream 10 exiting the CO₂ separation unit 300 through the CO₂ exit line 310 may be at a temperature T2 comprised between 2°C and 5°C, for example at 3°C.

In figure 2, the first stream 10 exiting the CO₂ separation unit 300 through the CO₂ exit line 310 may be further cooled to a temperature T3 comprised between - 40°C and - 25°C, for example at - 30 °C by the cryogenic unit 200 that cooled the gas mixture to be upgraded prior to being fed to the storage unit 400.

Furthermore, the CO₂ separation unit 300 provides a second stream 20 which is exited from the CO₂ separation unit 300 through the CH₄ exit line 320. The second stream 20 may comprise a preponderant portion of gaseous CH₄ and a portion of gaseous CO₂. The second stream 20 may be further supplied to a CH₄ upgrading unit (e.g., a membrane upgrading unit) to increase further the CH₄ content of the second stream 20.

Referring to the storage unit 400, in some examples, the storage unit 400 may comprise a pressure-reducing device configured to expand the cooled first stream 10 (which may comprise the liquid CO₂) being fed to the storage unit 400 at a pressure P2 comprised between 10 barg and 25 barg. In these examples, the pressure-reducing device may be e.g., a Joule Thomson valve.

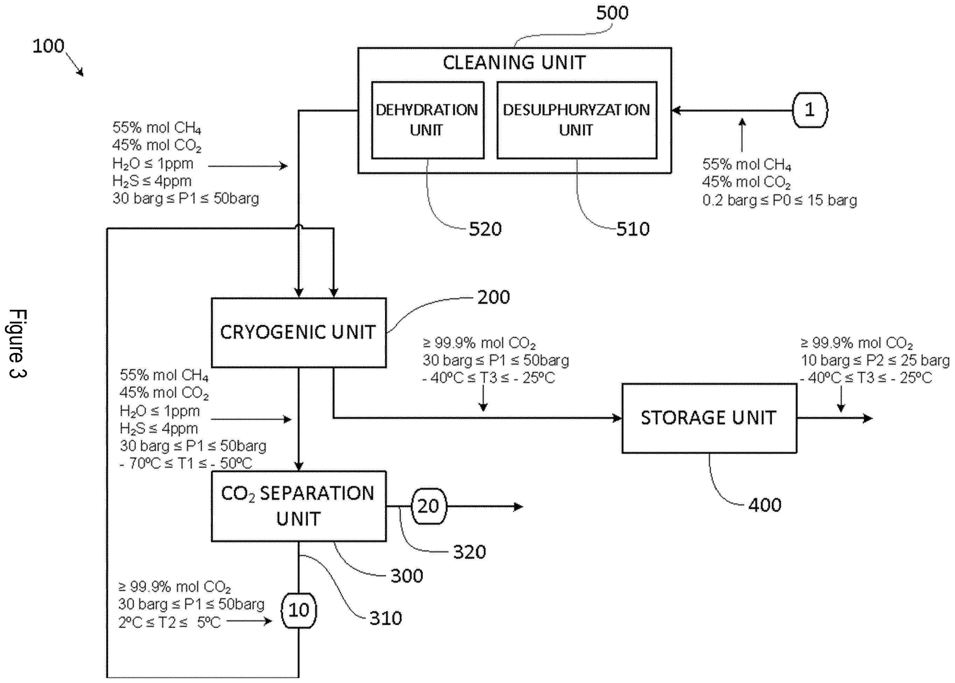

Figure 3 schematically represents a plant 100 to obtain liquid carbon dioxide by upgrading a gas mixture 1. Features of figure 3 may be described in combination with the features of any of the examples shown in figures 1 or 2.

Compared to figure 2, the plant 100 represented in figure 3 further comprises a cleaning unit 500. The cleaning unit 500 comprises a desulphurization unit 510 and a dehydration unit 520. The desulphurization unit 510 and the dehydration unit 520 may comprise the features of any example of desulphurization unit and / or the features of any example of the dehydration unit herein disclosed (e.g., referring to the description and examples related to figure 1).

The desulphurization unit 510 may be configured to receive the gas mixture 1 to be upgraded with a pressure comprised between 0.2 barg and 15 barg, for example between 10 barg and 15 barg; and remove H₂S from the gas mixture 1 to be upgraded so that the gas mixture 1 to be upgraded may comprise 4 ppm of H₂S or less than 4 ppm of H₂S.

The dehydration unit 520 may be configured to receive the gas mixture 1 to be upgraded with a pressure comprised between 0.2 barg and 15 barg, for example between 10 barg and 15 barg; and remove moisture from the gas mixture 1 to be upgraded so that the gas mixture 1 to be upgraded may comprise 1 ppm of H₂O or less than 1 ppm of H₂O.

Therefore, the gas mixture 1 to be upgraded, which exits the cleaning unit 500, may comprise 4 ppm of H₂S or less than 4 ppm of H₂S, and 1 ppm of H₂O or less than 1 ppm of H₂O.

It may be noted that according to the examples disclosed herein, the desulphurization unit 510 may comprise a NaOH scrubbing column and an active carbon filter as aforementioned in examples referring to figure 1.

Similarly, the dehydration unit 520 may comprise one or more adsorbers as aforementioned in examples referring to figure 1.

In figure 3, the cleaning unit 500 is coupled to the cryogenic unit. The cleaning unit 500 may comprise an inlet and an outlet, the inlet of the cleaning unit 500 may be configured to receive the gas mixture 1 to be upgraded; and the outlet of the cleaning unit may be fluidically connected to the first inlet of the cryogenic unit 200.

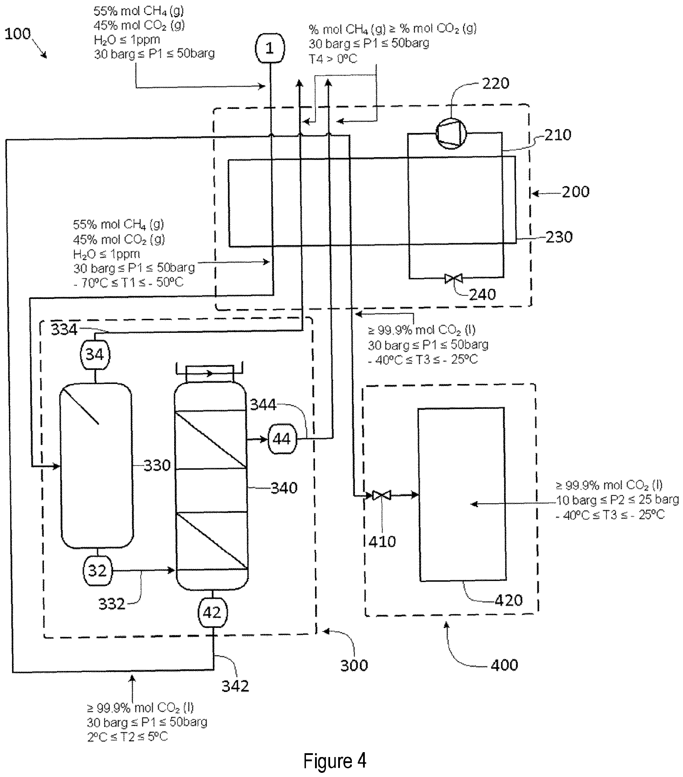

Figure 4 schematically represents a plant 100 to obtain liquid carbon dioxide by upgrading a gas mixture 1. Features of figure 4 may be described in combination with the features of any of the examples shown in figures 1 to 3.

In figure 4, the gas mixture 1 to be upgraded may comprise 55 % mol CH₄, 45 % mol CO₂, and an H₂O content of the gas mixture 1 that is equal to or less than 1 ppm. In the example of figure 4, the gas mixture 1 to be upgraded may be at a pressure P1 comprised between 30 barg and 50 barg, for example between 36 barg and 39 barg. Therefore, the gas mixture 1 to be upgraded may be supplied to the cryogenic unit 200 at the pressure comprised e.g., between 36 barg and 39 barg.

In figure 4, the cryogenic unit 200 comprises a mixed refrigerant circuit 210, a refrigerant compressor 220, a cold box 230, and a pressure-reducing device 240 such as a Joule Thomson valve. A mixed refrigerant within the mixed refrigerant circuit 210 may be compressed by the refrigerant compressor 220. The mixed refrigerant may be at least partially condensed before entering the cold box 230 and substantially fully condensed within the cold box 230. The substantially fully condensed mixed refrigerant may be flashed through the pressure-reducing device 240 (e.g., a joule Thomson valve). Therefore, a flash evaporation of the mixed refrigerant may be achieved which may result in at least a partial evaporation of the mixed refrigerant. The at least partial evaporation of the mixed refrigerant may provide a cooling duty across a range of temperatures comprised between - 150°C and 25°C. As a result, the refrigerant mixture may provide latent heat to cool the gas mixture 1 to be upgraded or the received stream.

It may be noted that depending on the ambient temperature, in some examples, the plant may comprise a pre-cooling unit. The pre-cooling unit may comprise a chiller. The pre-cooling unit may be configured to cool down the gas mixture 1 to be upgraded before being supplied to the cryogenic unit 200. Furthermore, the pre-cooling unit may be further configured to cool down the mixed refrigerant of the cryogenic unit 200 before entering the cold box 230. The pre-cooling unit may be in use when the ambient temperature to which the gas mixture 1 to be upgraded or to which the mixed refrigerant may be greater than a predetermined inlet temperature of the cold box 230 (e.g., t > 15°C). When the ambient temperature is higher than the predetermined inlet temperature of the cold box 230, the pre-cooling unit may cool the gas mixture 1 to be upgraded or the mixed refrigerant from ambient temperature to a temperature that is lower than the predetermined inlet temperature of the cold box 230.

By the passage of the gas mixture 1 to be upgraded within the cryogenic unit 200, the gas mixture 1 to be upgraded may be cooled to a temperature T1 comprised between - 70°C and - 50°C, for example between - 60°C and - 50°C.

Therefore, the gas mixture 1 to be upgraded that is exited from the cryogenic unit 200 may comprise a temperature between - 70°C and - 50°C, and may comprise the same above-mentioned composition (i.e., 55 % mol CH₄, 45 % mol CO₂, and the H₂O content within the gas mixture 1 is equal to or less than 1 ppm).

In figure 4, the cooled gas mixture 1 to be upgraded is supplied to the CO₂ separation unit 300 to at least partially separate CO₂ from the cooled gas mixture 1 to be upgraded. In this example of figure 4, the received cooled gas mixture 1 to be upgraded by the CO₂ separation unit 300 may comprise a temperature between - 70°C and - 50°C, and a pressure comprised between 30 barg and 50 barg.

In some examples, the received cooled gas mixture 1 to be upgraded by the CO₂ separation unit 300 may comprise a temperature between - 60°C and - 50°C, and a pressure comprised between 36 barg and 39 barg.

In the example of figure 4, the CO₂ separation unit 300 comprises a flash tank 330 and a distillation column 340. The flash tank 330 may be configured to receive the gas mixture 1 to be upgraded with: the temperature comprised between - 70°C and - 50°C; and the pressure comprised between 30 barg and 50 barg.

The flash tank 330 may be further configured to recover a first flash tank stream 32 from the flash tank 330 through a CO₂ rich flash tank exit line 332. The first flash tank stream 32 may comprise a portion of liquid CO₂ and a portion of liquid CH₄, wherein the portion of liquid CO₂ is greater than the portion of liquid CH₄.

In the example of figure 4, the portion of liquid CO₂ of the first flash tank stream 32 may be comprised between 75% mol and 80% mol, and the portion of liquid CH₄ of the first flash tank stream 32 may be comprised between 20% mol and 25% mol.

The flash tank 330 may be further configured to recover: a second flash tank stream 34 from the flash tank 330 through a CH₄ rich flash tank exit line 334. The second flash tank stream 34 may comprise a portion of gaseous CH₄ and a portion of gaseous CO₂; wherein the portion of gaseous CH₄ is greater than the portion of gaseous CO₂.

In the example of figure 4, the portion of gaseous CH₄ of the second flash tank stream 34 may be comprised between 75% mol and 85% mol, and the portion of gaseous CO₂ of the second flash tank stream 34 may be comprised between 15% mol and 25% mol.

Furthermore, the CO₂ separation unit 300 further comprises a distillation column 340 fluidically connected to the flash tank 330 through the CO₂ rich flash tank exit line 332. The distillation column may be configured to: receive the first flash tank stream 32 through the CO₂ rich flash tank exit line 332.

The distillation column 340 may be further configured to recover a first distillation column stream 42 from the distillation column 340 through the CO₂ rich distillation column exit line 342. The first distillation column stream 42 may comprise a final portion of liquid CO₂, wherein the final portion of liquid CO₂ is greater than or equal to 99.9% mol of the first distillation column stream. Therefore, a liquid CO₂ which is food grade may be obtained from the CO₂ separation unit 300.

The distillation column 340 may be further configured to recover a second distillation column stream 44 from the distillation column 340 through a CH₄ rich distillation column exit line 344. The second distillation column stream 44 may comprise at least a portion of gaseous CH₄ and at least a portion of gaseous CO₂; wherein the at least portion of gaseous CH₄ is greater than the at least portion of gaseous CO₂.

In the example of figure 4, the portion of gaseous CH₄ of the second distillation column stream 44 may be comprised between 75% mol and 85% mol and the portion of gaseous CO₂ of the second distillation column stream 44 may be comprised between 15% mol and 25% mol.

Distillation columns may comprise a vertical shell where separation of the components of the stream may be carried out, and column internals such as trays, plates, or packings that may be used to improve the separation of the different compounds of the stream (e.g., CH₄, CO₂).

Particularly, in the example of figure 4, the distillation column 340 does not comprise a condenser. Therefore, the equilibrium condition of the first plate of the distillation column 340 may be substantially the equilibrium condition of the flash tank 330. Therefore, the liquid fraction of the first flash tank stream 32 received by the distillation column 340 may be recovered at the bottom of the distillation column 340 whereas the gaseous fraction of the first flash tank stream 32 received by the distillation column 340 may be recovered at the top of the distillation column 340. Therefore, the plant 100 may comprise fewer parts and allow to implement simpler systems while directly obtaining liquid CO₂ during gas upgrading.

In some examples, the distillation column 340 may comprise a condenser fluidically connected to a top outlet of the distillation column 340.

In some examples, the distillation column 340 may comprise a reboiler fluidically connected to a bottom outlet of the distillation column 340.

Furthermore, the temperature of the first distillation column stream 42 may be comprised between 2°C and 5°C, for example at 3°C. The temperature T2 of the first distillation column stream 42 exiting the distillation column 340 through the CO₂ rich distillation column exit line 342 is the temperature to which the first distillation column stream 42 may be in stable equilibrium depending on the operating pressure of the distillation column 340 and the temperature of CO₂ so that the CO₂ comprised within the first distillation column stream 42 is in liquid phase. A stable equilibrium may refer to a state in which a system remains for a long period of time, and a disturbance causing the system to deviate from the stable state may not result in the system passing into another state.

In summary, the CO₂ separation unit 300 may provide a first distillation column stream 42 and a second distillation column stream 44.

The first distillation column stream 42 may be exited from the distillation column 340 through the CO₂ rich distillation column exit line 342. The second distillation column stream 44 may be exited from the distillation column 340 through the CH₄ rich distillation column exit line 344. The second distillation column stream 44 may comprise a preponderant portion of gaseous CH₄ and a portion of gaseous CO₂.

The second flash tank stream 34 and / or the second distillation column stream 44 may be further supplied to a CH₄ upgrading unit (e.g., a membrane upgrading unit) to increase further the CH₄ content of the second flash tank stream 34 and / or the second distillation column stream 44.

In some examples, the plant 100 may comprise a membrane upgrading unit to be fed with the second flash tank stream 34 through the CH₄ rich flash tank exit line 334 and / or to be fed with the second distillation column stream 44 through the CH₄ rich distillation column exit line 344, wherein the second flash tank stream 34 and / or the second distillation column stream 44 may be heated by the cryogenic unit 200 that cooled the gas mixture 1 to be upgraded prior to being fed to the membrane upgrading unit.

The membrane upgrading unit may comprise one or more membranes. The one or more membranes may be fed with a gas mixture stream comprising a portion of CH₄ (for example 55% mol - 65% mol of the gas mixture), and a portion of CO₂ (for example 45% mol - 35% mol of the gas mixture). The one or more membranes may separate at least part of the CH₄ from the gas mixture stream based on the permeability of CH₄ and the permeability of CO₂. Because the permeability of CH₄ is different from the permeability of CO₂, the one or more membranes may split the gas mixture stream into a permeate fraction and a retentate fraction. The permeate fraction may correspond to the gas portion with high permeability, e.g., the portion of CO₂. The retentate fraction may correspond to the gas portion with low permeability, e.g., the portion of CH₄. Consequently, the membrane upgrading unit may allow selective separation of CO₂ from the gas mixture stream. As a result, the membrane upgrading unit may exit a stream comprising at least 96% mol CH₄.

It may be understood that the gas mixture stream may refer to e.g., the second flash tank stream and / or the second distillation column stream 44

Examples of membranes for CO₂ removal from the gas mixture stream may be, for example, a carbon molecular sieve hollow fibre membrane, or a polymer membrane.

In some of these examples, the membrane upgrading unit may be configured to receive the second flash tank stream 34 through the CH₄ rich flash tank exit line 334 and / or the second distillation column stream 44 through the CH₄ rich distillation column exit line 344 at: a temperature T4 comprised between 10°C and 25°C; and a pressure comprised between 30 barg and 50 barg.

The membrane upgrading unit may be further configured to separate at least part of the CH₄ from the second flash tank stream 34 and / or the second distillation column stream 44; and configured to output a first membrane upgrading stream and a second membrane upgrading stream.

The first membrane upgrading stream may be exited from the membrane upgrading unit through a CH₄ rich membrane upgrading exit line. The first membrane upgrading stream may comprise a final portion of the gaseous CH₄, wherein the final portion of the gaseous CH₄ is greater than or equal to 96% of the first membrane upgrading stream. In some of these examples, the CH₄ rich membrane upgrading exit line may be fluidically connected to the grid. Therefore, an upgraded methane stream (i.e., the gaseous CH₄ of the first membrane upgrading stream with a final portion of gaseous CH₄ greater than or equal to 96% mol) may readily be injected into the grid for its use.

The second membrane upgrading stream may be exited from the membrane upgrading unit through a CO₂ rich membrane upgrading exit line. The second membrane upgrading stream may comprise a preponderant portion of gaseous CO₂. In some of these examples, the membrane upgrading unit may be fluidically connected to the dehydration unit through the CO₂ rich membrane upgrading exit line. The dehydration unit may comprise the features of any example of the dehydration unit herein disclosed (referring to the description of figures 1 - 3). Therefore, there may be a feedback line (i.e., the CO₂ rich membrane upgrading exit line) from the membrane upgrading unit to the dehydration unit so that the second membrane upgrading stream that may be CO₂ rich (i.e., comprising a preponderant portion of CO₂, and a portion of CH₄) may be fed to the dehydration unit to start over the process of separation and liquefaction of CO₂. It may be noted that in some examples, the membrane upgrading unit may be in fluid connection with a compression unit through the CO₂ rich membrane upgrading exit line. The compression unit may be configured to compress the second membrane upgrading stream to a pressure comprised between 30 barg and 50 barg. Furthermore, the compression unit may be in fluid connection with the cryogenic unit. Therefore, the second membrane upgrading stream may be fed to the cryogenic unit at a pressure comprised between 30 barg and 50 barg. As a result, the portion of CH₄ of the second membrane upgrading stream may be recirculated into the plant 100, avoiding spillage of CH₄.

Referring to figure 4, the first distillation column stream 42 exiting the distillation column 340 through the CO₂ rich distillation column exit line 342 may be further cooled to a temperature T3 comprised between - 40°C and - 25°C, for example at - 30 °C by the cryogenic unit 200 that cooled the gas mixture 1 to be upgraded prior to being fed to the storage unit 400.

In figure 4, the storage unit 400 comprises a pressure-reducing device 410 and a tank 420.

The pressure-reducing device 410 may be configured to expand the cooled first distillation column stream 42 (which may comprise the liquid CO₂) being fed to the storage unit 400 at a pressure comprised between 10 barg and 25 barg, for example at 16 barg. In some of these examples, the pressure-reducing device may be e.g., a Joule Thomson valve.

The tank 420 may be configured to store the liquid CO₂ at a temperature T3 comprised between - 40°C and - 25°C and at a pressure comprised between 10 barg and 25 barg.

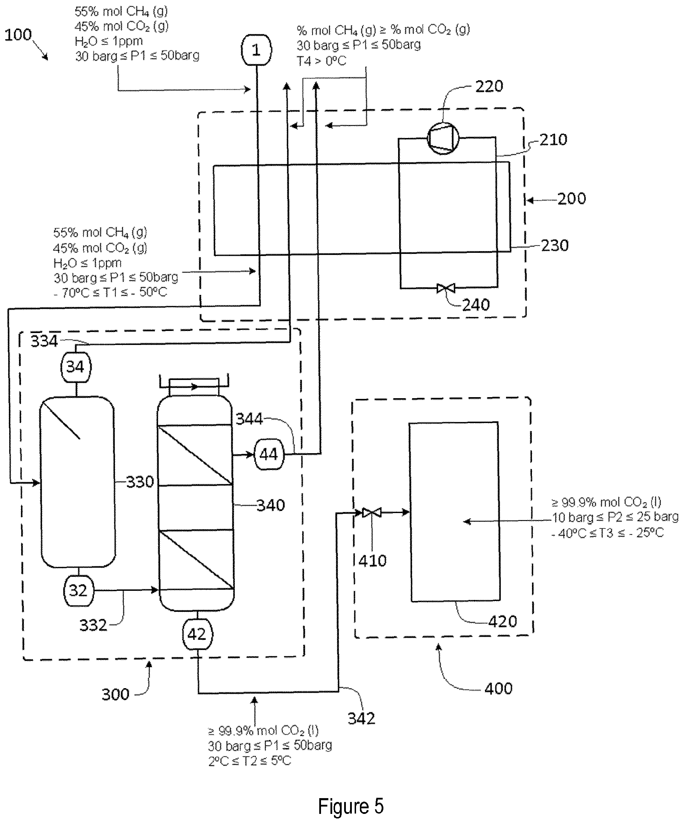

Figure 5 schematically represents a plant 100 to obtain liquid carbon dioxide by upgrading a gas mixture 1. Features of figure 5 may be described in combination with the features of any of the examples shown in figures 1 to 4.

Compared to figure 4, the plant 100 represented in figure 5 differs because the first distillation column stream 42 exiting the distillation column 340 through the CO₂ rich distillation column exit line 342 may be directly fed to the storage unit 400 and / or further cooled to a temperature comprised between - 40°C and - 25°C, for example at - 30 °C by an additional cryogenic unit.

In the example of figure 5, the cryogenic unit 200 may be configured to: receive the gas mixture 1 to be upgraded with a pressure comprised between 30 barg and 50 barg; and cool the gas mixture 1 to be upgraded to a temperature comprised between - 70°C and - 50°C. In these examples, the CO₂ separation unit 300 may be coupled to the cryogenic unit 200, and the CO₂ separation unit 300 may be configured to at least partially separate CO₂ from the gas mixture 1 to be upgraded, and to output: the first distillation column stream 42 comprising liquid CO₂ through the CO₂ rich distillation column exit line 342; and the second distillation column stream 44 comprising a portion of gaseous CH₄ and a portion of gaseous CO₂ through the CH₄ rich distillation column exit line 344. In these examples, the storage unit 400 may be fed with the liquid CO₂ through the CO₂ rich distillation column exit line 342.

In some of these examples, the temperature to which the gas mixture 1 to be upgraded is cooled may be comprised between - 60°C and - 50°C.

Furthermore, the above-mentioned operating pressures and the above-mentioned operating temperatures to which the gas mixture 1 to be upgraded may be received by the CO₂ separation unit 300, may be selected to achieve selective separation of CO₂ from the gas mixture 1 to be upgraded (comprising at least a portion of CH₄) because of different liquefaction temperatures between the portion of CO₂ and the portion of CH₄ for the operating pressure of the CO₂ separation unit 300. At these operating pressures and at these operating temperatures, the energy cost of the separation of CO₂ from the gas mixture to be upgraded may be decreased. As a result, a plant with reduced energy consumption may be obtained.

Throughout the description, and particularly referring to the description of figures 4 to 7, it may be understood that the term "first distillation column stream 42" may be equivalent to the term "first stream 10" (used in the description referring to figures 1 - 3). These terms may be used interchangeably.

Throughout the description, and particularly referring to the description of figures 4 to 7, it may be understood that the term "second distillation column stream 44" may be equivalent to the term "second stream 20" (used in the description referring to figures 1 - 3). These terms may be used interchangeably.

Throughout the description, and particularly referring to the description of figures 4 to 7, it may be understood that the term "the CO₂ exit line 310" may be equivalent to the term "CO₂ rich distillation column exit line 342" (used in the description referring to figures 1 - 3). These terms may be used interchangeably.

Throughout the description, and particularly referring to the description of figures 4 to 7, it may be understood that the term "the CH₄ exit line 320" may be equivalent to the term "CH₄ rich distillation column exit line 344" (used in the description referring to figures 1 - 3). These terms may be used interchangeably.

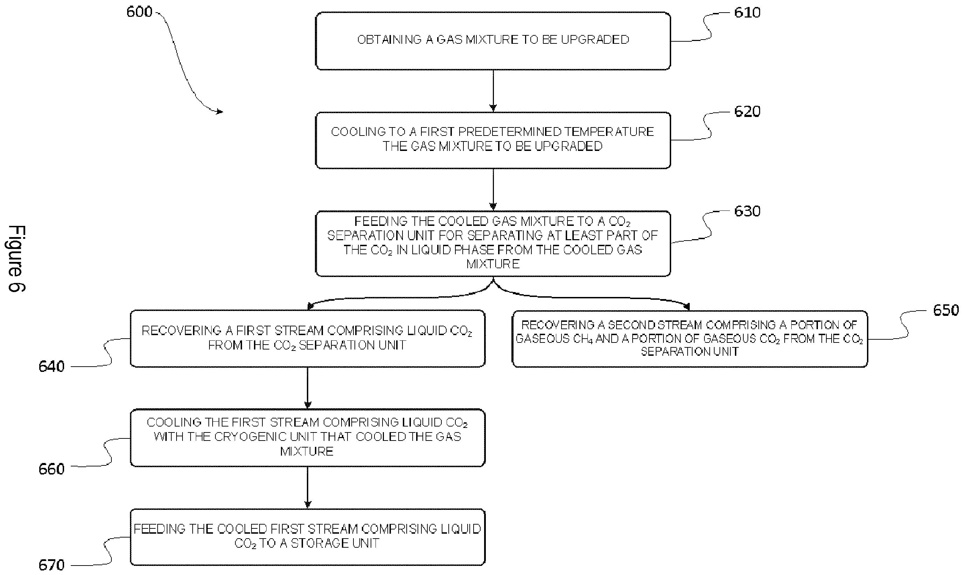

Figure 6 schematically shows a block diagram of a method 600 of obtaining liquid carbon dioxide by upgrading a gas mixture according to an example of the present disclosure. Features of figure 6 may be described in combination with the features of any of the examples shown in figures 1 to 5.

At block 610, the block 610 may comprise obtaining a gas mixture 1 to be upgraded, the gas mixture 1 to be upgraded comprising 1 ppm of H₂O or less than 1 ppm of H₂O.

At block 620, the block 620 may comprise feeding the gas mixture 1 to be upgraded and cooling to a first predetermined temperature the gas mixture to be upgraded.

At block 630, the block 630 may comprise feeding the cooled gas mixture 1 to be upgraded to a CO₂ separation unit for separating at least part of the CO₂ in liquid phase from the cooled gas mixture.

At block 640, the block 640 may comprise recovering a first stream 10 comprising liquid CO₂ from the CO₂ separation unit 300 through a CO₂ exit line 310.

At block 650, the block 650 may comprise recovering a second stream 20 comprising a portion of gaseous CH₄ and a portion of gaseous CO₂ from the CO₂ separation unit 300 through a CH₄ exit line 320.

At block 660, the block 660 may comprise feeding the first stream comprising liquid CO₂ to the cryogenic unit 200 that cooled the gas mixture 1 to be upgraded and cooling to a second predetermined temperature the first stream 10 comprising liquid CO₂ with the cryogenic unit 200.

At block 670, the block 670 may comprise feeding the cooled first stream 10 comprising liquid CO₂ to a storage unit 400 through the CO₂ exit line 310.

In some examples, the block 610 may further comprise obtaining the gas mixture 1 to be upgraded at a pressure comprised between 30 barg and 50 barg.

In some examples, the first predetermined temperature to which the cryogenic unit 200 is configured to cool the gas mixture to be upgraded may be comprised between - 70°C and - 50°C (as aforementioned in the description referring to figures 1 to 5).

In some examples, the block 630 may comprise: feeding the cooled gas mixture to a flash tank 330, the cooled gas mixture to the first predetermined temperature comprised between - 70°C and - 50°C and to a pressure comprised between 30 barg and 50 barg; recovering: a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and a second flash tank stream 34 from the flash tank through a CH₄ rich flash tank exit line 334, the second flash tank stream 34 comprising a portion of gaseous CH₄ and a portion of gaseous CO₂; wherein the portion of gaseous CH₄ is greater than the portion of gaseous CO₂; and feeding the first flash tank stream to a distillation column fluidically connected to the flash tank through the CO₂ rich flash tank exit line.

In some of these examples, the block 640 may comprise recovering the first stream from the distillation column through the CO₂ exit line, the first stream comprising a final portion of liquid CO₂, wherein the final portion of the liquid CO₂ is greater than or equal to 99.9% mol of the first stream.

In some of these examples, the block 650 may comprise recovering the second stream from the distillation column through the CH₄ exit line, the second stream comprising the portion of gaseous CH₄ and the portion of CO₂, wherein the portion of gaseous CH₄ is greater than the portion of gaseous CO₂.

In some examples, the second predetermined temperature to which the cryogenic unit 200 is configured to cool the gas mixture to be upgraded may be comprised between - 40°C and - 25°C (as aforementioned in the description referring to figures 1 to 5).

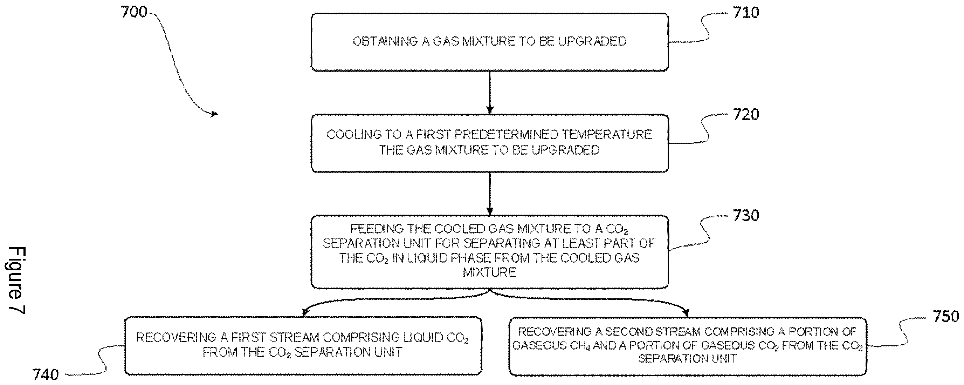

Figure 7 schematically shows a block diagram of a method 700 of obtaining liquid carbon dioxide by upgrading a gas mixture according to an example of the present disclosure. Features of figure 7 may be described in combination with the features of any of the examples shown in figures 1 to 5.

At block 710, the block 710 may comprise obtaining a gas mixture 1 to be upgraded, the gas mixture 1 to be upgraded comprising 1 ppm of H₂O or less than 1 ppm of H₂O.

At block 720, the block 720 may comprise feeding the gas mixture 1 to be upgraded to a cryogenic unit 200 and cooling to a first predetermined temperature comprised between - 70°C and - 50°C the gas mixture to be upgraded.

At block 730, the block 730 may comprise feeding the cooled gas mixture 1 to be upgraded to a CO₂ separation unit for separating at least part of the CO₂ in liquid phase from the cooled gas mixture.

At block 740, the block 740 may comprise recovering a first stream 10 comprising liquid CO₂ from the CO₂ separation unit 300 through a CO₂ exit line 310.

At block 750, the block 750 may comprise recovering a second stream 20 comprising a portion of gaseous CH₄ and a portion of gaseous CO₂ from the CO₂ separation unit 300 through a CH₄ exit line 320.

In some examples, the method 700 may comprise feeding the first stream 10 comprising liquid CO₂ to a storage unit 400 through the CO₂ exit line 310.

In some examples, the block 710 may further comprise obtaining the gas mixture 1 to be upgraded at a pressure comprised between 36 barg and 39 barg.

In some examples, the first predetermined temperature to which the cryogenic unit 200 is configured to cool the gas mixture to be upgraded may be comprised between - 60°C and - 50°C (as aforementioned in the description referring to figures 1 to 5).

In some examples, the block 730 may comprise: feeding the cooled gas mixture to a flash tank 330, the cooled gas mixture to the first predetermined temperature comprised between - 70°C and - 50°C and to a pressure comprised between 30 barg and 50 barg; recovering: a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and a second flash tank stream 34 from the flash tank through a CH₄ rich flash tank exit line 334, the second flash tank stream 34 comprising a portion of gaseous CH₄ and a portion of gaseous CO₂; wherein the portion of gaseous CH₄ is greater than the portion of gaseous CO₂; and feeding the first flash tank stream to a distillation column fluidically connected to the flash tank through the CO₂ rich flash tank exit line.

In some of these examples, the block 740 may comprise recovering the first stream from the distillation column through the CO₂ exit line, the first stream comprising a final portion of liquid CO₂, wherein the final portion of the liquid CO₂ is greater than or equal to 99.9% mol of the first stream.

In some of these examples, the block 750 may comprise recovering the second stream from the distillation column through the CH₄ exit line, the second stream comprising the portion of gaseous CH₄ and the portion of CO₂, wherein the portion of gaseous CH₄ is greater than the portion of gaseous CO₂.

In some examples, the block 760 may comprise cooling the first stream 10 to a second predetermined temperature comprised between - 40°C and - 25°C (as aforementioned in the description referring to figure 5).

For reasons of completeness, various aspects of the present disclosure are set out in the following numbered clauses:
1. A plant to obtain liquid carbon dioxide by upgrading a gas mixture comprising CO₂ and CH₄, the plant comprising:
   a cryogenic unit comprising a first inlet to receive the gas mixture to be upgraded and a first outlet to exit the gas mixture to a first predetermined temperature to which the cryogenic unit is configured to cool the gas mixture to be upgraded;
   a CO₂ separation unit in fluid communication with the first outlet of the cryogenic unit, wherein the CO₂ separation unit comprises a CO₂ exit line and a CH₄ exit line, the CO₂ separation unit configured to separate at least part of the CO₂ in liquid phase from the cooled gas mixture, and to exit:
      a first stream comprising liquid CO₂, through the CO₂ exit line; and
      a second stream comprising a portion of gaseous CH₄ and a portion of gaseous CO₂, through the CH₄ exit line;
   wherein the CO₂ exit line is in fluid communication with a second inlet of the cryogenic unit, the second inlet to receive the first stream; and wherein a second outlet of the cryogenic unit exits the first stream to a second predetermined temperature to which the cryogenic unit is configured to cool the first stream; and
   a storage unit in fluid communication with the second outlet of the cryogenic unit, the storage unit to receive the cooled first stream comprising liquid CO₂ and to store the liquid CO₂.
2. The plant according to clause 1, the plant comprising a desulphurization unit coupled to the cryogenic unit, the desulphurization unit configured to:
   receive the gas mixture to be upgraded with a pressure comprised between 0.2 barg and 15 barg; and
   remove H₂S from the gas mixture to be upgraded so that the gas mixture to be upgraded comprises 4 ppm of H₂S or less than 4 ppm of H₂S.
3. The plant according to clause 2, wherein the desulphurization unit comprises:
   a NaOH scrubbing column configured to reduce an H₂S content of the gas mixture to be upgraded to a resulting H₂S content which is less than or equal to 100 ppm of H₂S; and
   an active carbon filter coupled to the NaOH scrubbing column, the active carbon filter configured to reduce the resulting H₂S content of the gas mixture to be upgraded to a final H₂S content which is less than or equal to 4 ppm of H₂S.
4. The plant according to clauses 2 or 3,
   wherein the desulphurization unit comprises an inlet and an outlet, the inlet of the desulphurization unit is configured to receive the gas mixture to be upgraded; and the outlet of the desulphurization unit is fluidically connected to the first inlet of the cryogenic unit so that the gas mixture to be upgraded comprising that is fed to the first inlet of the cryogenic unit comprises 4 ppm of H₂S or less than 4 ppm of H₂S.
5. The plant according to any of clauses 1 to 3, the plant comprising a dehydration unit coupled to the cryogenic unit, the dehydration unit configured to:
   receive the gas mixture to be upgraded with a pressure comprised between 0.2 barg and 15 barg; and
   remove moisture from the gas mixture to be upgraded so that the gas mixture to be upgraded comprises 1 ppm of H₂O or less than 1 ppm of H₂O.
6. The plant according to clause 5, wherein the dehydration unit comprises:
   one or more adsorbers configured to reduce an H₂O content of the gas mixture to be upgraded, to a final H₂O content which is less than or equal to 1 ppm of H₂O.
7. The plant according to clause 6, wherein the one or more adsorbers are selected to achieve that the gas mixture to be upgraded comprises 1 ppm of H₂O or less than 1 ppm of H₂O.
8. The plant according to any of clauses 5 to 7,
   wherein the dehydration unit comprises an inlet and an outlet, the inlet of the dehydration unit is configured to receive the gas mixture to be upgraded; and the outlet of the dehydration unit is fluidically connected to the first inlet of the cryogenic unit so that the gas mixture to be upgraded that is fed to the inlet of the cryogenic unit comprises 1 ppm of H₂O or less than 1 ppm of H₂O.
9. The plant according to clause 1, the plant comprising a cleaning unit coupled to the cryogenic unit, the cleaning unit comprising:
   a desulphurization unit, the desulphurization unit configured to:
      receive the gas mixture to be upgraded with a pressure comprised between 0.2 barg and 15 barg; and
      remove H₂S from the gas mixture to be upgraded so that the gas mixture to be upgraded comprises 4 ppm of H₂S or less than 4 ppm of H₂S; and
   a dehydration unit coupled to the desulphurization unit; the dehydration unit configured to:
      receive the gas mixture to be upgraded with a pressure comprised between 0.2 barg and 15 barg; and
      remove moisture from the gas mixture to be upgraded so that the gas mixture to be upgraded comprises 1 ppm of H₂O or less than 1 ppm of H₂O.
10. The plant according to clause 9, wherein the desulphurization unit comprises:
   a NaOH scrubbing column configured to reduce an H₂S content of the gas mixture to be upgraded to a resulting H₂S content which is less than or equal to 100 ppm of H₂S; and
   an active carbon filter coupled to the NaOH scrubbing column, the active carbon filter configured to reduce the resulting H₂S content of the gas mixture to be upgraded to a final H₂S content which is less than or equal to 4 ppm of H₂S.
11. The plant according to clause 9 or 10, wherein the dehydration unit comprises:
   one or more adsorbers configured to reduce an H₂O content of the gas mixture to be upgraded to a final H₂O content which is less than or equal to 1 ppm of H₂O.
12. The plant according to any of clauses 9 to 11,
   wherein the cleaning unit comprises an inlet and an outlet, the inlet of the cleaning unit is configured to receive the gas mixture to be upgraded; and the outlet of the cleaning unit is fluidically connected to the first inlet of the cryogenic unit.
13. The plant according to any of clauses 1 to 12, the plant comprising a first compression unit coupled to the cryogenic unit, the first compression unit configured to compress the gas mixture to be upgraded at a first compression pressure.
14. The plant according to clause 13, wherein the first compression pressure is comprised between 0.2 barg and 15 barg.
15. The plant according to clause 13, wherein the first compression pressure is comprised between 10 barg and 15 barg.
16. The plant according to clause any of clauses 1 to 15, the plant comprising a second compression unit coupled to the cryogenic unit, the second compression unit configured to compress the gas mixture to be upgraded at a second compression pressure.
17. The plant according to clause 16, wherein the second compression pressure is greater than the first compression pressure.
18. The plant according to clauses 16 or 17, wherein the second compression pressure is comprised between 36 barg and 39 barg.
19. The plant according to any of clauses 1 to 18, wherein the first predetermined temperature to which the cryogenic unit is configured to cool the gas mixture to be upgraded, is comprised between - 70°C and - 50°C.
20. The plant according to any of clauses 1 to 19, wherein a pressure to which the cryogenic unit is configured to receive the gas mixture to be upgraded, is comprised between 30 barg and 50 barg.
21. The plant according to any of clauses 1 to 20, wherein the CO₂ separation unit comprises:
   a flash tank comprising:
      ∘ a flash tank inlet in fluid communication with the first outlet of the cryogenic unit, the flash tank inlet to receive the gas mixture to be upgraded;
      ∘ a first flash tank outlet to exit a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and
      ∘ a second flash tank outlet to exit a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂;
   a distillation column comprising:
      ∘ a distillation column inlet in fluid communication with the first flash tank outlet through the CO₂ rich flash tank exit line, the distillation column inlet to receive the first flash tank stream;
      ∘ a first distillation column outlet to exit the first stream from the distillation column through the CO₂ exit line, the first stream comprising a final portion of liquid CO₂, wherein the final portion of the liquid CO₂ is greater than or equal to 99.9% mol of the first stream; and
      ∘ a second distillation column outlet to exit the second stream from the distillation column through the CH₄ exit line, the second stream comprising the portion of gaseous CH₄ and the portion of CO₂ through the CH₄ exit line, wherein the portion of gaseous CH₄ is greater than the portion of gaseous CO₂.
22. The plant according to clause 21, wherein the CO₂ separation unit comprises:
   a flash tank configured to:
      receive the gas mixture to be upgraded with:
         ▪ the temperature comprised between - 70°C and - 50°C; and
         ▪ the pressure comprised between 30 barg and 50 barg;
      recover:
         ▪ a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and
         ▪ a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂;
   a distillation column fluidically connected to the flash tank through the CO₂ rich flash tank exit line, the distillation column configured to:
      receive the first flash tank stream through the CO₂ rich flash tank exit line; and
      recover:
         ▪ the first stream from the distillation column through the CO₂ exit line, the first stream comprising a final portion of the liquid CO₂, wherein the final portion of the liquid CO₂ is greater than or equal to 99.9% mol of the first stream; and
         ▪ the second stream from the distillation column through the CH₄ exit line, the second stream comprising the portion of gaseous CH₄ and the portion of CO₂ through the CH₄ exit line, wherein the portion of gaseous CH₄ is greater than the portion of gaseous CO₂.
23. The plant according to clauses 21 or 22, wherein the first stream comprising the liquid CO₂ is at a temperature comprised between 2°C and 5°C.
24. The plant according to any of clauses 1 to 23, wherein the second predetermined temperature to which the cryogenic unit is configured to cool the first stream, is comprised between - 40°C and - 25°C.
25. The plant according to any of clauses 1 to 24, wherein the storage unit comprises a pressure-reducing device configured to expand the liquid CO₂ being fed to the storage unit at a pressure comprised between 10 barg and 25 barg.
26. The plant according to any of clauses 22 to 25, the plant comprising:
   a membrane upgrading unit to be fed with the second flash tank stream through the CH₄ rich flash tank exit line and / or to be fed with the second stream through the CH₄ exit line, wherein the second flash tank stream and / or the second stream is heated by the cryogenic unit that cooled the gas mixture to be upgraded prior to being fed to the membrane upgrading unit.
27. The plant according to clause 26, wherein the membrane upgrading unit is configured to:
   receive the second flash tank stream through the CH₄ rich flash tank exit line and / or the second stream through the CH₄ exit line at:
      ▪ a temperature comprised between 10°C and 25°C; and
      ▪ a pressure comprised between 30 barg and 50 barg;
   separate at least part of the CH₄ in gaseous phase from the second flash tank stream and / or the second stream; and
   output:
      ▪ a first membrane upgrading stream from the membrane upgrading unit through a CH₄ rich membrane upgrading exit line, the first membrane upgrading stream comprising a final portion of the gaseous CH₄, wherein the final portion of the gaseous CH₄ is greater than or equal to 96% mol of the first membrane upgrading stream; and
      ▪ a second membrane upgrading stream from the membrane upgrading unit through a CO₂ rich membrane upgrading exit line, the first membrane upgrading stream comprising a preponderant portion of gaseous CO₂.
28. The plant according to clauses 5 and 27,
   wherein the dehydration unit is fluidically connected to the membrane upgrading unit through the CO₂ rich membrane upgrading exit line; and
   wherein the dehydration unit is at least partially fed with the second membrane upgrading stream through the CO₂ rich membrane upgrading exit line.
29. A plant to obtain liquid carbon dioxide by upgrading a gas mixture comprising CO₂ and CH₄, the plant comprising:
   a cryogenic unit comprising a first inlet to receive the gas mixture to be upgraded with a pressure comprised between 30 barg and 50 barg; and a first outlet to exit the gas mixture to a first predetermined temperature comprised between - 70°C and - 50°C to which the cryogenic unit is configured to cool the gas mixture to be upgraded;
   a CO₂ separation unit in fluid communication with the first outlet of the cryogenic unit, wherein the CO₂ separation unit comprises a CO₂ exit line and a CH₄ exit line, the CO₂ separation unit configured to separate at least part of the CO₂ in liquid phase from the cooled gas mixture, and to exit:
      a first stream comprising liquid CO₂, through the CO₂ exit line; and
      a second stream comprising a portion of gaseous CH₄ and a portion of gaseous CO₂, through the CH₄ exit line;
   a storage unit comprising an inlet and an outlet, the inlet of the storage unit in fluid communication with the CO₂ separation unit, the storage unit to receive the first stream comprising liquid CO₂ and to store the liquid CO₂.
30. The plant according to clause 29, wherein the pressure to which the cryogenic unit is configured to receive the gas mixture to be upgraded, is comprised between 36 and 39 barg.
31. The plant according to clauses 29 or 30, wherein the first predetermined temperature to which the cryogenic unit is configured to cool the gas mixture to be upgraded, is comprised between - 60°C and - 50°C.
32. The plant according to any of clauses 29 to 31, the plant comprising a desulphurization unit coupled to the cryogenic unit, the desulphurization unit configured to:
   receive the gas mixture to be upgraded with a pressure comprised between 0.2 barg and 15 barg; and
   remove H₂S from the gas mixture to be upgraded so that the gas mixture to be upgraded comprises less than 4 ppm of H₂S.
33. The plant according to clause 32, wherein the desulphurization unit comprises:
   a NaOH scrubbing column configured to reduce an H₂S content of the gas mixture to be upgraded to a resulting H₂S content which is less than or equal to 100 ppm of H₂S; and
   an active carbon filter coupled to the NaOH scrubbing column, the active carbon filter configured to reduce the resulting H₂S content of the gas mixture to be upgraded to a final H₂S content which is less than or equal to 4 ppm of H₂S.
34. The plant according to clauses 32 or 33,
   wherein the desulphurization unit comprises an inlet and an outlet, the inlet of the desulphurization unit is configured to receive the gas mixture to be upgraded; and the outlet of the desulphurization unit is fluidically connected to the first inlet of the cryogenic unit and the gas mixture to be upgraded that is fed to the cryogenic unit comprises less than 4 ppm of H₂S.
35. The plant according to any of clauses 29 to 34, the plant comprising a dehydration unit coupled to the cryogenic unit, the dehydration unit configured to:
   receive the gas mixture to be upgraded with a pressure comprised between 0.2 and 15 barg; and
   remove moisture from the gas mixture to be upgraded so that the gas mixture to be upgraded comprises 1 ppm of H₂O or less than 1 ppm of H₂O.
36. The plant according to clause 35, wherein the dehydration unit comprises:
   one or more adsorbers configured to reduce an H₂O content of the gas mixture to be upgraded to a final H₂O content which is less than or equal to 1 ppm of H₂O.
37. The plant according to clause 36, wherein the one or more adsorbers are selected to achieve that the gas mixture to be upgraded comprises 1 ppm of H₂O or less than 1 ppm of H₂O.
38. The plant according to any of clauses 35 to 37,
   wherein the dehydration unit comprises an inlet and an outlet, the inlet of the dehydration unit is configured to receive the gas mixture to be upgraded; and the outlet of the dehydration unit is fluidically connected to the first inlet of the cryogenic unit so that the gas mixture to be upgraded that is fed to the cryogenic unit comprises 1 ppm of H₂O or less than 1 ppm of H₂O.
39. The plant according to clause 38, the plant comprising a cleaning unit coupled to the cryogenic unit, the cleaning unit comprising:
   a desulphurization unit, the desulphurization unit configured to:
      receive the gas mixture to be upgraded with a pressure comprised between 0.2 and 15 barg; and
      remove H₂S from the gas mixture to be upgraded so that the gas mixture to be upgraded
      comprises 4 ppm of H₂S or less than 4 ppm of H₂S; and
   a dehydration unit coupled to the desulphurization unit; the dehydration unit configured to:
      receive the gas mixture to be upgraded with a pressure comprised between 0.2 and 15 barg; and
      remove moisture from the gas mixture to be upgraded so that the gas mixture to be upgraded comprises 1 ppm of H₂O or less than 1 ppm of H₂O.
40. The plant according to clause 39, wherein the desulphurization unit comprises:
   a NaOH scrubbing column configured to reduce an H₂S content of the gas mixture to be upgraded to a resulting H₂S content which is less than or equal to 100 ppm of H₂S; and
   an active carbon filter coupled to the NaOH scrubbing column, the active carbon filter configured to reduce the resulting H₂S content of the gas mixture to be upgraded to a final H₂S content which is less than or equal to 4 ppm of H2S.
41. The plant according to clause 39 or 40, wherein the dehydration unit comprises:
   one or more adsorbers configured to reduce an H₂O content of the gas mixture to be upgraded to a final H₂O content which is less than or equal to 1 ppm of H₂O.
42. The plant according to any of clauses 39 to 41,
   wherein the cleaning unit comprises an inlet and an outlet, the inlet of the cleaning unit is configured to receive the gas mixture to be upgraded; and the outlet of the cleaning unit is fluidically connected to the first inlet of the cryogenic unit and the gas mixture to be upgraded that is fed to the cryogenic unit comprises 4 ppm of H2S or less than 4 ppm of H2S, and 1 ppm of H₂O or less than 1 ppm of H₂O.
43. The plant according to any of clauses 29 to 42, the plant comprising a first compression unit coupled to the cryogenic unit, the first compression unit configured to compress the gas mixture to be upgraded at a first compression pressure.
44. The plant according to clause 43, wherein the first compression pressure is comprised between 0.2 and 15 barg.
45. The plant according to clause 43, wherein the first compression pressure is comprised between 10 and 15 barg.
46. The plant according to clause any of clauses 29 to 45, the plant comprising a second compression unit coupled to the cryogenic unit, the second compression unit configured to compress the gas mixture to be upgraded at a second compression pressure.
47. The plant according to clause 46, wherein the second compression pressure is greater than the first compression pressure.
48. The plant according to clauses 46 or 47, wherein the second compression pressure is comprised between 30 and 50 barg.
49. The plant according to clauses 46 or 47, wherein the first compression pressure is comprised between 36 and 39 barg.
50. A method of obtaining liquid carbon dioxide by upgrading a gas mixture, the method comprising:
   obtaining a gas mixture to be upgraded, the gas mixture to be upgraded comprising 1 ppm of H₂O or less than 1 ppm of H₂O;
   feeding the gas mixture to be upgraded to a cryogenic unit and cooling to a first predetermined temperature the gas mixture to be upgraded;
   feeding the cooled gas mixture to a CO₂ separation unit for separating at least part of the CO₂ in liquid phase from the cooled gas mixture;
   recovering a first stream comprising liquid CO₂ from the CO₂ separation unit through a CO₂ exit line;
   recovering a second stream comprising a portion of gaseous CH₄ and a portion of gaseous CO₂ from the CO₂ separation unit through a CH₄ exit line;
   feeding the first stream comprising liquid CO₂ to the cryogenic unit that cooled the gas mixture to be upgraded and cooling to a second predetermined temperature the first stream comprising liquid CO₂ with the cryogenic unit; and
   feeding the cooled first stream comprising liquid CO₂ to a storage unit through the CO₂ exit line.
51. The method according to clause 50,
   wherein the feeding the cooled gas mixture to a CO₂ separation unit for separating at least part of the CO₂ in liquid phase from the cooled gas mixture comprises:
      ∘ feeding the cooled gas mixture to a flash tank, the cooled gas mixture to the first predetermined temperature comprised between - 70°C and - 50°C and to a pressure comprised between 30 barg and 50 barg;
      ∘ recovering:
         ▪ a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and
         ▪ a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂;
      ∘ feeding the first flash tank stream to a distillation column fluidically connected to the flash tank through the CO₂ rich flash tank exit line; and
   wherein recovering a first stream comprising liquid CO₂ from the CO₂ separation unit through a CO₂ exit line comprises:
      ∘ recovering the first stream from the distillation column through the CO₂ exit line, the first stream comprising a final portion of liquid CO₂, wherein the final portion of the liquid CO₂ is greater than or equal to 99.9% mol of the first stream; and
   wherein recovering a second stream comprising a portion of gaseous CH₄ and a portion of gaseous CO₂ from the CO₂ separation unit through a CH₄ exit line comprises:
      ∘ recovering the second stream from the distillation column through the CH₄ exit line, the second stream comprising the portion of gaseous CH₄ and the portion of CO₂, wherein the portion of gaseous CH₄ is greater than the portion of gaseous CO₂.
52. The method according to clause 50, wherein a pressure to which the gas mixture is obtained, is comprised between 30 barg and 50 barg.
53. The method according to any of clauses 50 to 52, wherein the first predetermined temperature to which the cryogenic unit is configured to cool the gas mixture to be upgraded may be comprised between - 70°C and - 50°C.
54. A method of obtaining liquid carbon dioxide by upgrading a gas mixture, the method comprising:
   obtaining a gas mixture to be upgraded, the gas mixture to be upgraded comprising 1 ppm of H₂O or less than 1 ppm of H₂O;
   feeding the gas mixture to be upgraded to a cryogenic unit and cooling to a first predetermined temperature the gas mixture to be upgraded;
   feeding the cooled gas mixture to a CO₂ separation unit for separating at least part of the CO₂ in liquid phase from the cooled gas mixture;
   recovering a first stream comprising liquid CO₂ from the CO₂ separation unit through a CO₂ exit line; and recovering a second stream comprising a portion of gaseous CH₄ and a portion of gaseous CO₂ from the CO₂ separation unit through a CH₄ exit line.
55. The method according to clause 54, the method comprising:
   feeding the first stream comprising liquid CO₂ to a storage unit through the CO₂ exit line.
56. The method according to clauses 54 or 55, wherein a pressure to which the gas mixture to be upgraded is obtained, is comprised between 36 barg and 39 barg.
57. The method according to any of clauses 54 to 56, wherein the first predetermined temperature to which the cryogenic unit is configured to cool the gas mixture to be upgraded, is comprised between - 60°C and - 50°C.
58. The method according to any of clauses 54 to 57,
   wherein the feeding the cooled gas mixture to a CO₂ separation unit for separating at least part of the CO₂ in liquid phase from the cooled gas mixture comprises:
      ∘ feeding the cooled gas mixture to a flash tank, the cooled gas mixture to the first predetermined temperature comprised between - 70°C and - 50°C and to a pressure comprised between 30 barg and 50 barg;
      ∘ recovering:
         ▪ a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and
         ▪ a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂;
      ∘ feeding the first flash tank stream to a distillation column fluidically connected to the flash tank through the CO₂ rich flash tank exit line; and
   wherein recovering a first stream comprising liquid CO₂ from the CO₂ separation unit through a CO₂ exit line comprises:
      ∘ recovering the first stream from the distillation column through the CO₂ exit line, the first stream comprising a final portion of liquid CO₂, wherein the final portion of the liquid CO₂ is greater than or equal to 99.9% mol of the first stream; and
   wherein recovering a second stream comprising a portion of gaseous CH₄ and a portion of gaseous CO₂ from the CO₂ separation unit through a CH₄ exit line comprises:
      ∘ recovering the second stream from the distillation column through the CH₄ exit line, the second stream comprising the portion of gaseous CH₄ and the portion of CO₂, wherein the portion of gaseous CH₄ is greater than the portion of gaseous CO₂.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A plant to obtain liquid carbon dioxide by upgrading a gas mixture comprising CO₂ and CH₄, the plant comprising:
a cryogenic unit comprising a first inlet to receive the gas mixture to be upgraded and a first outlet to exit the gas mixture to a first predetermined temperature to which the cryogenic unit is configured to cool the gas mixture to be upgraded;
a CO₂ separation unit in fluid communication with the first outlet of the cryogenic unit, wherein the CO₂ separation unit comprises a CO₂ exit line and a CH₄ exit line, the CO₂ separation unit configured to separate at least part of the CO₂ in liquid phase from the cooled gas mixture, and to exit:
a first stream comprising liquid CO₂, through the CO₂ exit line; and
a second stream comprising a portion of gaseous CH₄ and a portion of gaseous CO₂, through the CH₄ exit line;
wherein the CO₂ exit line is in fluid communication with a second inlet of the cryogenic unit, the second inlet to receive the first stream; and wherein a second outlet of the cryogenic unit exits the first stream to a second predetermined temperature to which the cryogenic unit is configured to cool the first stream; and
a storage unit in fluid communication with the second outlet of the cryogenic unit, the storage unit to receive the cooled first stream comprising liquid CO₂ and to store the liquid CO₂.

2. The plant according to claim 1, the plant comprising a dehydration unit coupled to the cryogenic unit, the dehydration unit configured to remove moisture from the gas mixture to be upgraded so that the gas mixture to be upgraded comprises 1 ppm of H₂O or less than 1 ppm of H₂O.

3. The plant according to claim 2, wherein the dehydration unit comprises:
one or more adsorbers configured to reduce an H₂O content of the gas mixture to be upgraded, to a final H₂O content which is less than or equal to 1 ppm of H₂O.

4. The plant according to claim 3, wherein the one or more adsorbers are selected to achieve that the gas mixture to be upgraded comprises 1 ppm of H₂O or less than 1 ppm of H₂O.

5. The plant according to any of claims 2 to 4, wherein the dehydration unit comprises an inlet and an outlet, the inlet of the dehydration unit is configured to receive the gas mixture to be upgraded; and the outlet of the dehydration unit is fluidically connected to the first inlet of the cryogenic unit so that the gas mixture to be upgraded that is fed to the cryogenic unit comprises 1 ppm of H₂O or less than 1 ppm of H₂O.

6. The plant according to any of claims 1 to 5, wherein the first predetermined temperature to which the cryogenic unit is configured to cool the gas mixture to be upgraded, is comprised between - 70°C and - 50°C.

7. The plant according to any of claims 1 to 6, wherein a pressure to which the cryogenic unit is configured to receive the gas mixture to be upgraded, is comprised between 30 barg and 50 barg.

8. The plant according to any of claims 1 to 5, wherein the CO₂ separation unit comprises:
a flash tank configured to:
receive the gas mixture to be upgraded with:
▪ the temperature comprised between - 70°C and - 50°C; and
▪ the pressure comprised between 30 barg and 50 barg;
recover:
▪ a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and
▪ a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂;
a distillation column fluidically connected to the flash tank through the CO₂ rich flash tank exit line, the distillation column configured to:
receive the first flash tank stream through the CO₂ rich flash tank exit line; and
recover:
▪ the first stream from the distillation column through the CO₂ exit line, the first stream comprising a final portion of the liquid CO₂, wherein the final portion of the liquid CO₂ is greater than or equal to 99.9% mol of the first stream; and
▪ the second stream from the distillation column through the CH₄ exit line, the second stream comprising the portion of gaseous CH₄ and the portion of CO₂ through the CH₄ exit line, wherein the portion of gaseous CH₄ is greater than the portion of gaseous CO₂.

9. The plant according to claim 8, wherein the first stream comprising the liquid CO₂ is at a temperature comprised between 2°C and 5°C.

10. The plant according to any of claims 1 to 9, wherein the second predetermined temperature to which the cryogenic unit is configured to cool the first stream, is comprised between - 40°C and - 25°C.

11. The plant according to any of claims 8 to 10, the plant comprising:
a membrane upgrading unit to be fed with the second flash tank stream through the CH₄ rich flash tank exit line and / or to be fed with the second stream through the CH₄ exit line, wherein the second flash tank stream and / or the second stream is heated by the cryogenic unit that cooled the gas mixture to be upgraded prior to being fed to the membrane upgrading unit.

12. The plant according to claim 11, wherein the membrane upgrading unit is configured to:
receive the second flash tank stream through the CH₄ rich flash tank exit line and / or the second stream through the CH₄ exit line at:
▪ a temperature comprised between 10°C and 25°C; and
▪ a pressure comprised between 30 barg and 50 barg;
separate at least part of the CH₄ in gaseous phase from the second flash tank stream and / or the second stream; and
output:
▪ a first membrane upgrading stream from the membrane upgrading unit through a CH₄ rich membrane upgrading exit line, the first membrane upgrading stream comprising a final portion of the gaseous CH₄, wherein the final portion of the gaseous CH₄ is greater than or equal to 96% mol of the first membrane upgrading stream; and
▪ a second membrane upgrading stream from the membrane upgrading unit through a CO₂ rich membrane upgrading exit line, the first membrane upgrading stream comprising a preponderant portion of gaseous CO₂.

13. The plant according to claims 2 and 12,
wherein the dehydration unit is fluidically connected to the membrane upgrading unit through the CO₂ rich membrane upgrading exit line; and
wherein the dehydration unit is at least partially fed with the second membrane upgrading stream through the CO₂ rich membrane upgrading exit line.

14. A method of obtaining liquid carbon dioxide by upgrading a gas mixture, the method comprising:
obtaining a gas mixture to be upgraded, the gas mixture to be upgraded comprising 1 ppm of H₂O or less than 1 ppm of H₂O;
feeding the gas mixture to be upgraded to a cryogenic unit and cooling to a first predetermined temperature the gas mixture to be upgraded;
feeding the cooled gas mixture to a CO₂ separation unit for separating at least part of the CO₂ in liquid phase from the cooled gas mixture;
recovering a first stream comprising liquid CO₂ from the CO₂ separation unit through a CO₂ exit line;
recovering a second stream comprising a portion of gaseous CH₄ and a portion of gaseous CO₂ from the CO₂ separation unit through a CH₄ exit line;
feeding the first stream comprising liquid CO₂ to the cryogenic unit that cooled the gas mixture to be upgraded and cooling to a second predetermined temperature the first stream comprising liquid CO₂ with the cryogenic unit; and
feeding the cooled first stream comprising liquid CO₂ to a storage unit through the CO₂ exit line.

15. The method according to claim 14,
wherein the feeding the cooled gas mixture to a CO₂ separation unit for separating at least part of the CO₂ in liquid phase from the cooled gas mixture comprises:
∘ feeding the cooled gas mixture to a flash tank, the cooled gas mixture to the first predetermined temperature comprised between - 70°C and - 50°C and to a pressure comprised between 30 barg and 50 barg;
∘ recovering:
▪ a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and
▪ a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂;
∘ feeding the first flash tank stream to a distillation column fluidically connected to the flash tank through the CO₂ rich flash tank exit line; and
wherein recovering a first stream comprising liquid CO₂ from the CO₂ separation unit through a CO₂ exit line comprises:
∘ recovering the first stream from the distillation column through the CO₂ exit line, the first stream comprising a final portion of liquid CO₂, wherein the final portion of the liquid CO₂ is greater than or equal to 99.9% mol of the first stream; and
wherein recovering a second stream comprising a portion of gaseous CH₄ and a portion of gaseous CO₂ from the CO₂ separation unit through a CH₄ exit line comprises:
∘ recovering the second stream from the distillation column through the CH₄ exit line, the second stream comprising the portion of gaseous CH₄ and the portion of CO₂, wherein the portion of gaseous CH₄ is greater than the portion of gaseous CO₂.
